# EUROPÄISCHE PATENTSCHRIFT

(11) **EP 0 750 554 B1**
(45) Veröffentlichungstag und Bekanntmachung des Hinweises auf die Patenterteilung: **09.06.1999**
(21) Anmeldenummer: 95910501.6
(22) Anmeldetag: 18.02.1995
(51) Int. Cl.: B60S 1/34

(54) **WISCHARM FÜR EINE SCHEIBENWISCHERANLAGE, INSBESONDERE FÜR KRAFTFAHRZEUGE**
WIPER ARM FOR A WINDSCREEN WIPER SYSTEM, ESPECIALLY FOR MOTOR VEHICLES
BRAS POUR SYSTEME D'ESSUIE-GLACE DESTINE EN PARTICULIER AUX VEHICULES AUTOMOBILES

(30) Priorität: 15.03.1994 DE 4408732
(43) Veröffentlichungstag der Anmeldung: 02.01.1997
(73) Patentinhaber: ITT Automotive Europe GmbH, 60488 Frankfurt am Main (DE)
(72) Erfinder: EGNER-WALTER, Bruno, D-74076 Heilbronn (DE); SCHMID, Eckhardt, D-74336 Brackenheim (DE); SCHOLL, Wolfgang, D-74376 Gemmrigheim (DE)
(74) Vertreter: Dreiss, Fuhlendorf, Steimle & Becker
(86) Internationale Anmeldenummer: EP9500597
(87) Internationale Veröffentlichungsnummer: WO9525025

(56) Entgegenhaltungen:
- EP-A- 0 187 965
- WO-A-83/02094
- DE-A- 4 140 959
- DE-B- 1 099 875
- FR-A- 2 640 211
- GB-A- 637 671
- GB-A- 827 427
- US-A- 3 036 847

## Beschreibung

Die Erfindung bezieht sich auf einen Wischarm für eine Scheibenwischeranlage, insbesondere für Kraftfahrzeuge, mit den Merkmalen des Oberbegriffs des Anspruchs 1 oder des Anspruchs 10 oder des Anspruchs 11 oder des Anspruchs 16 oder des Anspruchs 24 oder des Anspruchs 25.

Die Erfindung geht dabei von einem aus der FR-A-2 640 211 oder aus der GB-A-637 671 bekannten Wischarm aus.

Der aus der FR-A-2 640 211 bekannte Wischarm hat ein als Gußteil gefertigtes Befestigungsteil mit einer Öffnung für die drehfeste Befestigung auf dem Ende einer antreibbaren Wischerwelle, wobei das Befestigungsteil mit dieser Öffnung auf die Welle aufsteckbar bzw. aufpreßbar ist und die Sicherung mit einer Befestigungsmutter erfolgt. Die Befestigung ist annähernd in Montageposition unverlierbar derartig am Befestigungsteil gehalten, daß der Wischarm durch Abschrauben der Mutter von der Welle abziehbar ist. Dazu hat die Mutter einen radial abstehenden Bund, der von einem bzw. mehreren am Befestigungsteil vorgesehenen Anschlägen übergriffen wird. Die Mutter ist innerhalb einer an der Oberseite des Befestigungsteiles vorgesehenen Ausnehmung angeordnet, in deren Boden die Befestigungsöffnung für die Wischerwelle einmündet und die nach einer Seite radial geöffnet ist oder bei anderer Interpretation von einem nach einer Seite radial offenen, an der Oberseite des Befestigungsteiles angeformten Kragen gebildet ist. Jedenfalls weist die Seitenwand der Ausnehmung eine Nut auf, die den bund der seitlich in die Ausnehmung eingeschobenen Befestigungsmutter aufnimmt, wodurch die gewünschte Abziehfunktion gewährleistet ist. Durch Materialverformungen an der radialen Öffnung der Ausnehmung in der Art von Verstemmungen ist der am Befestigungsteil vorgesehene Einschubbereich für die Befestigungsmutter gesichert.

Der aus der GB-A-637 671 bekannte Wischarm hat ein aus Blech gefertigtes Befestigungsteil, das aus zwei separaten Teilen zusammengesetzt ist, die unlösbar aneinander befestigt sind. Ein Blechteil, das schwenkbar mit dem Gelenkteil des Wischarmes verbunden ist, hat einen im wesentlichen U-artigen Querschnitt mit zwei Seitenwänden und einem diese Seitenwände miteinander verbindenden Rückenteil. Das zweite Blechteil hat die Aufgabe der drehfesten Befestigung an der Wischerwelle. Es ist innerhalb des U-artigen Querschnittes des ersten Teiles angeordnet und durch eine kombinierte Steck- und Nietverbindung an dem ersten Teil befestigt. Dabei ist das zweite Blechteil derartig abgewinkelt, daß zwischen den beiden Blechteilen ein kammerartiger Hohlraum gebildet ist, in dem die Befestigungsmutter angeordnet ist. Die beiden Blechteile sind von fluchtenden Öffnungen durchsetzt, wobei die Öffnung in dem zweiten Teil für die Befestigung auf der Welle dient und der Rand der Öffnung in dem ersten, unartig profilierten Blechteil den Anschlag für die Befestigungsmutter bildet. Die Befestigungsmutter ist in dem beschriebenen Hohlraum in axialer Ausrichtung zu den beiden Öffnungen angeordnet, wobei der oberhalb des radialen Bundes befindlichen Teil der Befestigungsmutter die Öffnung in dem ersten Blechteil durchgreift.

Beide vorstehend beschriebene Lösungen beziehen sich jeweils auf eine ganz bestimmte Ausführung eines Wischarmes, sie sind aber nicht geeignet, für die inzwischen im Fahrzeugbau verwendete Vielfalt unterschiedlicher Scheibenwischertypen eine Lösung im Hinblick die Ausstattung des Wischarmes mit einer die Abziehfunktion gewährleistenden Befestigungsmutter anzubieten.

Zur Abrundung des Bildes über den Stand der Technik wird nachfolgend noch allgemeine Wischarmlösungen angeführt, bei denen die Befestigungsmutter keine Abziehfunktion erfüllt.

Aus der DE-GM 71 04 759 ist ein Wischarm mit einem als Druckgußteil gefertigten Befestigungsteil ersichtlich, welches eine als Innenkonus ausgebildete Öffnung besitzt. Das Befestigungsteil ist mit seiner Öffnung auf einen Rändelkonus am Ende einer als Vollwelle ausgebildeten Wischerwelle aufgepreßt und mit einer separaten Befestigungsmutter gehalten, wobei die Befestigungsmutter auf den Gewindezapfen der Wischerwelle aufgeschraubt ist, der in Verlängerung des Rändelkonus die Öffnung des Befestigungsteiles durchgreift. Eine Abdeckkappe aus Kunststoff überdeckt das montierte Befestigungsteil einschließlich der Befestigungsmutter.

Aus der DE 41 40 959 A1 ist ein anderer Wischarm bekannt, dessen Befestigungsteil als Blechkörper hergestellt ist, an welchem ein Metallgußteil befestigt ist, welches mit einer konischen Öffnung für die drehfeste Montage auf dem konischen Ende einer Wischerwelle versehen ist. Die Montage dieses Wischarmes an der Wischerwelle erfolgt wiederum durch Aufstecken des Befestigungsteils auf das mit einem Außenkonus und einem zylindrischen Gewindeansatz ausgestattete Wischerwellenende und Aufschrauben einer separaten Befestigungsmutter. Dadurch wird das Gußteil des Befestigungsteiles auf den Konus des Wischerwellenendes aufgepreßt und drehfest an diesem gehalten.

Aus der DE 41 17 107 A1 oder DE 41 34 980 A1 ist ein Wischarm mit einem als Druckgußteil hergestellten Befestigungsteil mit konischer Öffnung bekannt. Dieser Wischarm ist in der bereits beschriebenen Art und Weise unter Verwendung einer separaten Befestigungsmutter an dem Ende einer Wischerwelle befestigt. In den hier vorliegenden Fällen ist die Wischerwelle als Hohlwelle ausgeführt, wobei der Hohlraum der Wischerwelle zur Hindurchleitung von Scheibenreinigungsflüssigkeit verwendet wird. Das Befestigungsteil einschließlich die Befestigungsmutter sowie der am Wischerwellenende angeordnete Schlauchanschluß für die Durchleitung von Scheibenreinigungsflüssigkeit sind nach der Montage des Wischarmes an der Wischerwelle von einer Abdeckkappe überdeckt.

Aufgabe der Erfindung ist es, eine größere Vielfalt an Wischarmlösungen für die Verwendung an Fahrzeugen bereitzustellen, bei denen die Befestigungsmutter zumindest annähernd in Montageposition derartig unverlierbar an dem Befestigungsteil des Wischarmes gehalten ist, daß mit der Befestigungsmutter der Wischarm von der Antriebswelle abziehbar ist.

Diese Aufgabe wird durch einen Wischarm mit den Merkmalen des Oberbegriffs des Anspruchs 1 oder des Anspruchs 10 oder des Anspruchs 11 oder des Anspruchs 16 oder des Anspruchs 24 oder des Anspruchs 25 gelöst.

Wenn man, insbesondere bei einem als Gußteil gefertigten Befestigungsteil, eine geringe Bauhöhe anstrebt, kann man gemäß Anspruch 1 das Befestigungsteil an der von der zu wischenden Scheibe abgewandten Oberseite mit einer am Umfang geschlossenen vorzugsweise zylindrischen, Ausnehmung versehen. In den Boden dieser Ausnehmung mündet die Öffnung für die Befestigung des Wischarmes auf der Antriebswelle ein. Die Befestigungsmutter ist innerhalb dieser Ausnehmung, also zumindest teilweise, versenkt angeordnet, wobei sie mit ihrer Unterseite auf dem Boden der Ausnehmung bzw. auf der dort befindlichen Unterlegscheibe aufliegt. Die über dem Bund angeordneten Anschläge erstrecken sich ebenfalls innerhalb der Ausnehmung. Die Ausnehmung kann zusätzlich noch durch eine relativ kleine Abdeckkappe überdeckt werden, wodurch sich ein annehmbarer Anblick für einen Betrachter bietet.

Vorteilhafte Ausgestaltungen eines Wischarmes gemäß Anspruch 1 ergeben sich aus den Unteransprüchen 2-9.

Eine recht einfache aber ziemlich robuste und zuverlässige Art der Anschläge bilden gemäß Anspruch 2 zwei Stifte. Diese Stifte überbrücken die Ausnehmung und sind oberhalb des Bundes in fluchtenden Bohrungen angeordnet, die in die Wandung eingebracht sind, welche die Ausnehmung umgibt. Die Stifte befinden sich an gegenüberliegenden Seiten der Befestigungsmutter und verlaufen in einer rechtwinklig zur Drehachse der Befestigungsmutter angeordneten Ebene und dabei zumindest annähernd parallel zueinander. Die Stifte und die zugehörigen fluchtenden Bohrungen können dabei parallel oder rechtwinklig zur gedachten Mittellängsachse des Befestigungsteils ausgerichtet sein. Je nach den konkret vorhandenen geometrischen Verhältnissen des Befestigungsteiles, der Größe der zu übertragenden Kräfte und eventuell der Reibungsverhältnisse zwischen Bund und Anschlägen kann der Fachmann gemäß Anspruch 3 aus einer Vielfalt von runden, oder rechteckigen oder anders profilierten Querschnitten die richtige bzw. optimale Querschnittsform für die Stifte auswählen.

Bei einer Ausführungsform nach Anspruch 4 ist vorgesehen, daß die Befestigungsmutter nur dann mittels der Anschläge am Befestigungsteil gehalten ist, wenn das vorteilhaft oder erforderlich ist. Das ist jeweils bis zur Montage des Wischarms an der Antriebswelle und dann wieder für die Demontage des Wischarmes von der Antriebswelle der Fall. In der Zwischenzeit, in welcher die Befestigungsmutter auf dem Gewindeansatz der Antriebswelle befestigt ist, können die Anschläge entfernt werden. Diese Ausführungsform ist besonders dann von Vorteil, wenn die Anschläge einem möglichen Betrachter ein unschönes Aussehen vermitteln würden.

Gemäß Anspruch 5 könnten solche entfernbaren Anschläge vorteilhaft zwei parallele, voneinander beabstandete Stifte sein, die an einem Ende durch ein überbrückendes Element starr miteinander verbunden sind. Diese Art zweizinkige Gabel ist von außerhalb des Befestigungsteiles in entsprechende parallele, fluchtende Bohrungen einbringbar bzw. daraus entfernbar, welche sich durch zumindest eine Wandung des Befestigungsteiles erstrecken.

Weitere vorteilhafte Varianten für die Befestigung einer Befestigungsmutter in einer Ausnehmung des Befestigungsteiles eines Wischarmes sind in den Ansprüchen 6 bis 9 aufgezeigt.

Gemäß Anspruch 6 ist am bodenseitigen Rand der Ausnehmung ein Absatz vorgesehen, der radial neben dem Bund der Befestigungsmutter angeordnet ist. Dieser Absatz kann geschlossen umlaufend oder auch sektorenweise ausgeführt sein, wobei die einzelnen Sektoren über den Umfang verteilt sind. Der Absatz ist zumindest geringfügig höher als der Bund der Befestigungsmutter, um die Drehbarkeit der Befestigungsmutter zu gewährleisten. Eine Lochscheibe liegt auf dem Absatz auf und übergreift mit ihrem inneren Rand den Bund der Befestigungsmutter. Da die Lochscheibe außerdem an dem Befestigungsteil festgelegt ist, wirkt sie als Anschlag für den Bund der Befestigungsmutter. Das Oberteil der Befestigungsmutter ragt durch das Loch der Lochscheibe hindurch.

Gemäß Anspruch 7 liegt eine Lochscheibe lose auf dem Bund der Befestigungsmutter auf, und eine Sicherungsscheibe ist über der Lochscheibe die Lochscheibe radial übergreifend angeordnet und an der Wand der Ausnehmung gehalten oder festgelegt. Die Sicherungsscheibe bildet den Anschlag für den Bund der Befestigungsmutter.

Gemäß Anspruch 8 ist eine Klemmbrille als Anschlag mit ihrem inneren Rand über dem Bund der Befestigungsmutter angeordnet und mit ihrem äußeren Rand bzw. mit dafür bestimmten Abschnitten durch Verspannen an der Wand der Ausnehmung festgelegt.

Gemäß Anspruch 9 ist ein radial aufgeschnittener Federring, der als Anschlag für den Bund der Befestigungsmutter fungiert, radial in einem gewissen Bereich beweglich und axial abgestützt in der Wand der Ausnehmung angeordnet. Mit dem inneren Rand ragt der Federring radial in die Ausnehmung hinein. Der Bund der Befestigungsmutter ist gestuft ausgeführt. Der untere Teil des Bundes ist derart konisch verjüngt, daß er unter vorübergehender Aufweitung des Federringes durch dessen innere Öffnung hindurchgepreßt werden kann. Der Durchmesser des oberen Teiles des gestuften Bundes ist etwas kleiner als der Innendurchmesser des Federringes in dessen Ausgangszustand. Nach dem Durchtritt des konischen Teiles des Bundes nimmt der Federring auf dem oberen Teil des Bundes seine ursprüngliche Form und Größe ein und wirkt somit als Anschlag.

Diese Varianten gemäß der Ansprüche 6 bis 9 besitzen genauso wie die Lösung gemäß Anspruch 1 den besonderen Vorteil der geringen Bauhöhe und der versenkten Anordnung der Befestigungsmutter. Die Ausnehmung im Befestigungsteil kann auch hier durch eine relativ kleine Abdeckkappe verschlossen werden.

Die Aufgabe der Erfindung wird auch durch einen Wischarm gemäß Anspruch 10 oder durch einen Wischarm gemäß Anspruch 11 gelöst.

Ein Wischarm gemäß Anspruch 10 besitzt wiederum eine Ausnehmung an seiner Oberseite, in welche die Befestigungsmutter und eventuell eine Unterlegscheibe einzusetzen sind, wobei wiederum die Öffnung für die Befestigung des Wischarmes auf der Antriebswelle in diese Ausnehmung einmündet. Im Unterschied zu der im Anspruch 1 beschriebenen Ausnehmung ist diese Ausnehmung bezogen auf die Längserstreckung des Wischarmes zum der Wischblattbefestigung entgegengesetzten kurzen Ende hin oder seitlich geöffnet. Diese Öffnung bildet dabei einen Einschubbereich für die Befestigungsmutter und eventuell die Unterlegscheibe. In die Wand der Ausnehmung oder zumindest in die Seitenwände der geöffneten Ausnehmung ist eine Nut eingebracht. Diese Nut, das heißt deren Form und Größe, ist im Zusammenhang mit der geöffenten Ausnehmung so gestaltet, daß die Befestigungsmutter mit Bund und gegebenenfalls die zugehörige Unterlegscheibe seitlich in die Ausnehmung einschiebbar ist und daß die Oberseite der Nut zumindest abschnittsweise den Bund der Befestigungsmutter übergreift und als Anschlag wirkt. Die Befestigungsmutter wird bis zu einer zumindest annähernden Montageposition in die Ausnehmung eingeschoben, und danach wird der Einschubbereich durch ein separat am Befestigungsteil mountiertes Sicherungselement blockiert. Damit wird die Befestigungsmutter unverlierbar am Wischarm gehalten und außerdem ist die Abziehfunktion für den Wischarm gewährleistet. Auf die Art des Sicherungselementes wird später im Zusammenhang mit weiteren Ausführungen erfindungsgemäßer Wischarme eingegangen.

Die Ansprüche 11 - 15 beziehen sich auf einen Wischarm, bei dem das Befestigungsteil entweder insgesamt als Gußteil gefertigt ist oder bei dem das Befestigungsteil aus einem Blechteil besteht, welches mit einem als Gußteil gefertigten Einsatzteil komplettiert ist. In jedem Fall befindet sich die, vorzugsweise als Innenkonus ausgebildete, Öffnung zur Befestigung des Wischarmes auf der Antriebswelle in dem Gußteil.

Gemäß Anspruch 11 ist an der Oberseite des Gußteiles, welche der Oberseite des Befestigungsteiles entspricht, ein Kragen angeformt, der die Öffnung zur Befestigung des Wischarmes auf der Antriebswelle teilweise umgibt. Bezogen auf die geometrische Achse der Öffnung zur Befestigung des Wischarmes auf der Antriebswelle ist der Kragen zumindest nach einer Seite derartig radial geöffnet, daß ein Einschubbereich für die Befestigungsmutter gebildet ist. Die Befestigungsmutter ist seitlich mit ihrem Bund unter den Kragen eingeschoben, so daß das Oberteil der Befestigungsmutter in axialer Verlängerung zu der Befestigungsöffnung nach oben aus dem Kragen hervorsteht. Der Einschubbereich ist wiederum durch ein separat am Befestigungsteil montiertes Sicherungselement blockiert, wodurch die Befestigungsmutter in annähernder Montageposition gehalten ist. Der Kragen, der den Bund der Befestigungsmutter zumindest abschnittsweise übergreift, wirkt als Anschlag und gewährleistet im Zusammenhang mit der Befestigungsmutter die Abziehfunktion.

Vorteilhafte Ausgestaltungen eines Wischarmes gemäß Anspruch 11 ergeben sich aus den Unteransprüchen 12 - 15.

Gemäß Anspruch 12 ist ein Gußteil mit den Merkmalen des Anspruchs 11 von unten in ein im Querschnitt im wesentlichen u-förmiges Blechteil, vorzugsweise formschlüssig, eingesetzt und durch umgebogene Abschnitte des Blechteiles an dem Blechteil fixiert. Die umgebogenen Abschnitte des Blechteiles können dabei vorteilhaft als Haltelappen ausgebildet sein. Das Oberteil des Gußteiles mit dem angeformten Kragen zur Aufnahme der Befestigungsmutter und gegebenenfalls einer Unterlegscheibe durchgreift einen entsprechenden Druchbruch im Rückenteil des Blechteiles und steht so weit über die Oberseite des Blechteiles hervor, daß die Befestigungsmutter und eventuell Unterlegscheibe seitlich unter den Kragen einschiebbar ist. Der Einschubbereich wird durch ein Sicherungselement blockiert.

Gemäß Anspruch 13 ist der Kragen zumindest annähernd rechtwinklig in Bezug auf die Längsachse des Befestigungsteiles geöffnet. Der Durchbruch im Rückenteil und das diesen Druchbruch durchgreifende Oberteil des Gußteiles besitzen eine miteinander korrespondierende, im wesentlichen rechteckige Form bzw. Kontur. Die Längsseiten von Durchbruch und Gußteiloberteil verlaufen parallel zur Längsachse des Befestigungsteiles. Der Bund der Befestigungsmutter und eventuell die Unterlegscheibe, welche in die kragenförmige Aufnahme eingeschoben sind, überragen die Ausnehmung an deren Längsseiten in radialer Richtung. In den Bereichen, in welchen der Bund der Befestigungsmutter den Durchbruch radial überragt, drückt die Befestigungsmutter bei der Montage des Wischarmes auf die Antriebswelle und dann bei dem auf der Antriebswelle montierten Wischarm mit ihrem Bund auf die Oberseite des Blechteiles. Daraus resultiert eine Verteilung der Anpreßkräfte der Befestigungsmutter auf das Gußteil und das Blechteil. Dadurch bleibt die Verbindung zwischen Blechteil und Gußteil gewährleistet. Der Einschubbereich ist wiederum durch ein Sicherungselement blockiert.

Gemäß Anspruch 14 ist das Gußteil mit einer stirnseitigen Nut auf das Blechteil aufgesteckt und mittels umgebogener Abschnitte des Blechteiles insbesondere in Form von Haltelappen, an dem Blechteil fixiert.

Gemäß Anspruch 15 ist das Gußteil von oben auf dem Rückenteil des Blechteiles aufgesetzt, wobei der untere Teil des Gußteiles einen Druchbruch im Rückenteil des Blechteiles durchdringt. Das Gußteil ist mit dem Blechteil vernietet bzw. verstemmt oder verschraubt. Dazu können an die Unterseite des Gußteiles Nietzapfen angeformt sein, welche entsprechende Bohrungen im Blechteil durchdringen und an der Unterseite des Rückenteiles vernietet bzw. verstemmt sind. Ebenso ist die Verwendung von Fremdnieten oder Schrauben denkbar.

Die Aufgabe der Erfindung wird auch durch einen Wischarm gemäß Anspruch 16 gelöst.

Die Ansprüche 16 - 18 sind auf einen erfindungsgemäßen Wischarm gerichtet, dessen Befestigungsteil insgesamt als ein im Querschnitt im wesentlichen U-förmigen Blechteil mit zwei Seitenwänden und einem die Seitenwände verbindendem Rückenteil gefertigt ist.

Gemäß Anspruch 16 ist die Befestigungsmutter auf dem Rückenteil des Blechteils in Montageposition angeordnet. Mehrere über den Umfang verteilte Befestigungsabschnitte stehen neben dem Rand des Bundes der Befestigungsmutter von dem Rückenteil nach oben ab und übergreifen den Rand des Bundes der Befestigungsmutter. Die Befestigungsabschnitte sind an ihrem freien Ende erst nach dem Positionieren der Befestigungsmutter und gegebenenfalls der Unterlegscheibe nach radial einwärts über den Rand des Bundes gebogen. Die Befestigungsabschnitte wirken als mit dem Befestigungsteil verbundene Anschläge. Falls dieser Wischarm mit einer Lackierung zu versehen ist, dann erfolgt in diesem Fall das Lackieren vorteilhafterweise nach der Montage der Befestigungsmutter am Befestigungsteil, d. h. nach dem Umbiegen der Befestigungsabschnitte.
Absatz Die Befestigungsabschnitte selbst sind nach einer vorteilhaften Ausgestaltung gemaß Anspruch 17 vorteilhaft aus dem Rückenteil des Blechteiles herausgeformt. Dazu sind die Befestigungsabschnitte jeweils so aus dem Rückenteil herausgestanzt oder herausgeschert, daß jeder lappenförmige Befestigungsabschnitt nur noch an einer Seite mit dem Blechteil verbunden ist. Dann sind die einzelnen lappenförmigen Befestigungsabschnitte nach oben aus dem Rückenteil herausgebogen und schließlich an ihrem freien Ende radial einwärts über den Bund der Befestigungsmutter gebogen.

In einer vorteilhaften Ausgestaltung gemäß Anspruch 18 ist vorgesehen, daß sich bezogen auf die Drehachse der Befestigungsmutter an einer Seite kein aus dem Rückenteil des Blechteiles herausgebogener Befestigungsabschnitt befindet. Durch diese Maßnahme soll ein Einschubbereich für das seitliche Einschieben der Befestigungsmutter und gegebenenfalls der Unterlegscheibe gebildet werden. Die übrigen Befestigungsabschnitte werden bereits vor der Montage der Befestigungsmutter an dem Befestigungsteil mit ihrem freien Ende derart radial einwärts gebogen, daß die Befestigungsmutter durch den Einschubbereich seitlich bis in Montageposition einschiebbar ist, wobei ihr Bund unter den umgebogenen Enden der Befestigungsabschnitte positioniert ist. Der Einschubbereich wird dann wiederum durch ein Sicherungselement blockiert. Die Befestigungsabschnitte wirken als mit dem Befestigungsteil verbundene Anschläge. Ein eventuelles Lackieren des Wischarmes sollte in diesem Fall vorteilhaft vor der Montage von Befestigungsmutter und eventuell Unterlegscheibe am Befestigungsteil erfolgt sein, wobei auch die Befestigungsmutter und eventuelle Unterlegscheibe vor der Montage lackiert sein kann.

Die Ansprüche 19 - 23 beinhalten im wesentlichen verschiedene Ausführungen von Sicherungselementen für Wischarme nach den Ansprüchen 10 - 15 und 18, wobei ein Sicherungselement einen Einschubbereich nach dem seitlichen Einschieben der Befestigungsmutter und eventuell Unterlegscheibe unter mit dem Befestigungsteil verbundene Anschläge blockiert.

Gemäß Anspruch 19 ist ein solches Sicherungselement ein stopfenartiges Kunststoffteil mit Rastelementen. Dieses Kunststoffteil wird nach dem seitlichen Einschieben der Befestigungsmutter in eine entsprechende Ausnehmung oder einen entsprechenden Durchbruch im Einschubbereich eingeklipst.

Gemäß Anspruch 20 ist das Sicherungselement gelenkig mit einer Abdeckkappe für den Befestigungsbereich verbunden. Das Sicherungselement ist so am Befestigungsteil plaziert und befestigt, daß ein Herausrutschen der Befestigungsmutter nicht möglich ist. Der Wischarm wird mit geöffneter Abdeckkappe angeliefert, so daß der Angriff eines Werkzeuges an der Befestigungsmutter sofort möglich ist. Erst nach der Montage des Wischarmes wird die Abdeckkappe über die Befestigungsmutter bzw. den gesamten Befestigungsbereich geschwenkt und beispielsweise am Befestigungsteil verrastet.

Gemäß Anspruch 21 ist das Sicherungselement ein Gelenkbolzen, mit dem eine Abdeckkappe schwenkbar an dem Befestigungsteil angelenkt ist. Der Gelenkbolzen ist in fluchtenden Bohrungen im Befestigungsteil bzw. in dem Kragen der den Bund der Befestigungsmutter aufnimmt, angeordnet. Die Bohrungen sind so plaziert, daß durch den darin angeordneten Gelenkbolzen das Herausrutschen der Befestigungsmutter verhindert wird. Mit anderen Worten ausgedrückt ist der Einschubbereich durch den Gelenkbolzen als Sicherungselement blockiert.

Gemäß Anspruch 22 wird das Sicherungselement anstelle eines durchgehenden Gelenkbolzens von zwei Gelenkzapfen gebildet, die an eine Abdeckkappe angeformt sind. Die Abdeckkappe ist so an dem Befestigungsteil angelenkt, daß die Gelenkzapfen von außen durch die fluchtenden Bohrungen im Befestigungsteil bzw. im Kragen für die Aufnahme des Bundes der Befestigungsmutter hindurchragen und so den Einschubbereich blockieren.

Gemäß Anspruch 23 ist das Sicherungselement ein spezielles Formteil, das vorzugsweise aus Kunststoff gefertigt ist. Dieses Kunststofformteil ist so gestaltet, daß es auf das Befestigungsteil aufrastbar ist und somit den Einschubbereich blockiert. Außerdem ist das Formteil vorzugsweise so gestaltet, daß es den Befestigungsbereich des Befestigungsteiles im wesentlichen abdeckt und die Gestalt des Befestigungsteiles zu einem harmonischen Ganzen vervollständigt.

Die Aufgabe der Erfindung wird auch durch einen Wischarm gemäß Anspruch 24 oder durch einen Wischarm gemäß Anspruch 25 gelöst, bei denen jeweils die Befestigungsmutter auf der Oberseite des Befestigungsteiles bzw. auf dem Rückenteil des Befestigungsteiles aufliegt.

Gemäß Anspruch 24 ist eine Lochscheibe über dem Bund der Befestigungsmutter angeordnet und übergreift diesen und gegebenenfalls eine Unterlegscheibe, wobei das Oberteil der Befestigungsmutter durch das Loch der Lochscheibe hindurchragt. Die Lochscheibe wiederum besitzt von ihr abstehende Befestigungsabschnitte, mit denen sie am Befestigungsteil des Wischarms befestigt ist. Die Lochscheibe bildet hierbei den Anschlag für den Bund der Befestigungsmutter.

Um gegenüber dieser soliden und robusten Ausführung Platz und Material und damit Gewicht zu sparen, ist die Lochscheibe gemäß Anspruch 25 unter Verzicht auf den Bund direkt an der Befestigungsmutter befestigt. Dazu besitzt die Befestigungsmutter an ihrer Unterseite einen entsprechend stabilen hohlzylindrischen Fortsatz, der das Loch der Lochscheibe durchgreift und dessen Rand an der Unterseite der Lochscheibe umgebördelt ist. Die Bördelung ist so ausgeführt, daß die Befestigungsmutter relativ zur Lochscheibe verdrehbar aber trotzdem die Abziehfunktion der Befestigungsmutter gewährleistet ist. Die Bördelung muß also in der Lage sein, die erforderlichen Abzugskräfte von der Befestigungsmutter auf die Lochscheibe zu übertragen. Eine derartige Befestigungsmutter mit angebördelter Lochscheibe vereinfacht den Prozeß des Anbringens der Befestigungsmutter am Befestigungsteil des Wischarms.

Die in den Ansprüchen 24 und 25 verwendete Lochscheibe besitzt an ihrem äußeren Umfang mindestens zwei gegenüberliegende oder mehrere über den Umfang verteilt angeordnete von ihr abstehende Befestigungsabschnitte, die je nach Ausführung, Form und Größe des Befestigungsteiles des Wischarmes, vorzugsweise formschlüssig, an dem Befestigungsteil befestigt sind. Gemäß Anspruch 26 erstrecken sich die Befestigungsabschnitte axial außen entlang einer Seitenwand des Befestigungsteiles, wobei auch eine nutartige Ausnehmung in der Seitenwand zur Aufnahme des Befestigungsabschnittes vorhanden sein kann. Das Ende der Befestigungsabschnitte ist einwärts gebogen und untergreift die Seitenwand des Befestigungsteiles oder einen Rücksprung in der Seitenwand, oder es greift in einen Hinterschnitt oder eine Ausnehmung bzw. einen Druchbruch in der Seitenwand des Befestigungsteiles ein.

Bei einer Variante gemäß Anspruch 27 befinden sich im Rückenteil des Befestigungsteiles zumindest annähernd axial verlaufende Durchbrüche, die auch die Form von Kanälen annehmen können. Die vom äußeren Rand der Lochscheibe abstehenden Befestigungsabschnitte erstrecken sich durch bzw. in die Durchbrüche oder Kanäle und sind durch ihr umgebogenes Ende am Befestigungsteil verankert. Je nach Art und Größe des Befestigungsteiles sind die Enden der Befestigungsabschnitte einwärts oder auswärts gebogen und hintergreifen die Unterseite des Rückenteiles oder den unteren Rand der Seitenwand des Befestigungsteiles oder einen Vorsprung bzw. Rücksprung oder Hinterschnitt am Befestigungsteil, oder sie greifen in entsprechenden Ausnehmungen oder Durchbrüche ein.

Besonders einfach gestaltet sich die Befestigung der Befestigungsmutter am Befestigungsteil des Wischarmes, wenn gemäß Anspruch 28 die Befestigungsabschnitte der Lochscheibe federnd ausgebildet sind. In diesem Fall kann die Befestigungsmutter mit der Lochscheibe ganz einfach auf das Befestigungsteil aufgerastet werden. Bekanntermaßen wird der Aufrastvorgang durch entsprechende Auflaufschrägen an den Befestigungsabschnitten der Lochscheibe und/oder an den diesen Befestigungsabschnitten zugeordneten Bereichen des Befestigungsteiles des Wischarms noch weiter erleichtert.

Weitere vorteilhafte Ausgestaltungen ergeben sich aus den Unteransprüchen 29 - 40.

Vorteilhaft ist es, gemäß Anspruch 29 zwischen dem Befestigungsteil des Wischarms und der Befestigungsmutter oder Befestigungsschraube eine Unterlegscheibe anzuordnen, die in Anbetracht der relativ großen Anpreßkräfte bei der Montage des Wischarmes auf die Antriebswelle entsprechend stabil sein sollte. Die Unterseite der Befestigungsmutter oder Befestigungsschraube bewegt sich dann bei der Montage nicht auf dem Befestigungsteil des Wischarmes sondern auf der auf dem Befestigungsteil aufliegenden Unterlegscheibe. Die Oberfläche des Befestigungsteiles wird dadurch geschont, insbesondere bleibt eine evtl. auf das Befestigungsteil aufgebrachte Lackschicht erhalten.

Wenn gemäß Anspruch 30 die Unterlegscheibe an der Unterseite der Befestigungsmutter gehalten ist, ergibt sich daraus ein Vorteil für die Komplettierung des Wischarmes durch die Befestigungsmutter. Die Unterlegscheibe ist so in einem einzigen Arbeitsgang gemeinsam mit der Befestigungsmutter am Befestigungsteil des Wischarmes anzubringen.

In einer vorteilhaften Ausgestaltung gemäß Anspruch 31 besitzt die Befestigungsmutter zwischen dem Bund und dem Angriffsteil für einen entsprechenden Mutternschlüssel einen zylindrischen Schaft. Der Durchmesser dieses zylindrischen Schaftes ist kleiner als der Durchmesser des Bundes aber größer als die Weite des Angriffsteiles, beispielsweise des Sechskants, für einen Mutternschlüssel. Besonders vorteilhaft ist es, wenn der zylindrische Schaft die mit dem Bund der Befestigungsmutter zusammenwirkenden Anschläge, die mit dem Befestigungsteil verbunden sind, bzw. die Oberseite des Rückenteils des Befestigungsteiles, aus dem das Oberteil der Befestigungsmutter hervorsteht, zumindest geringfügig überragt. Der Mutternschlüssel kann in diesem Fall mit seinem unteren Rand auf den zylindrischen Schaft aufgesetzt werden und nimmt dadurch eine definierte Position ein. Wenn die Höhe des Schaftes, wie zuvor beschrieben, gewählt wird, kann der Mutternschlüssel nicht an den Anschlägen oder der Oberseite des Befestigungsteiles reiben und dort die Oberfläche bzw. eine aufgebrachte Lackschicht zerkratzen.

Die Ansprüche 32 bis 35 sind im wesentlichen auf eine weitere Vereinfachung bei der Montage des Wischarmes auf der Antriebswelle gerichtet. Die Vereinfachung besteht dabei in einer besseren bzw. einfacheren Zentrierung der Befestigungsmutter zum Anschrauben an dem Gewindefortsatz am freien Ende der Antriebswelle oder der, insbesondere als Innenkonus ausgebildeten, Öffnung des Befestigungsteiles in Bezug auf das freie Ende der Antriebswelle.

Gemäß Anspruch 32 besitzt die Befestigungsmutter an ihrer Unterseite, mit welcher sie auf dem Befestigungsteil bzw. der auf dem Befestigungsteil aufliegenden Unterlegscheibe aufliegt, einen kurzen zylindrischen Bohrungsabschnitt ohne Gewinde, bevor das Gewinde der Befestigungsmutter beginnt. Der Durchmesser dieses kurzen Bohrungsabschnittes ist etwas größer als der Durchmesser des Innengewindes der Befestigungsmutter und damit auch etwas größer als der äußere Durchmesser des Gewindefortsatzes am freien Ende der Antriebswelle. Bei der Montage des Wischarmes auf der Antriebswelle kann der Gewindefortsatz der Antriebswelle, nachdem er die Öffnung im Befestigungsteil durchdrungen hat, selbsttätig ohne zusätzliche Manipulierung in den kurzen zylindrischen Bohrungsabschnitt der Befestigungsmutter gelangen und damit die Befestigungsmutter in Bezug auf den Gewindefortsatz zentrieren. Nun braucht nur noch die Befestigungsmutter mit Hilfe eines entsprechenden Mutternschlüssels auf den Gewindefortsatz aufgeschraubt zu werden.

Gemäß Anspruch 33 besitzt das Befestigungsteil im Anschluß an die konisch verjüngte Seite der Öffnung für die Befestigung des Wischarmes auf der Antriebswelle einen kurzen zylindrischen Bohrungsabschnitt. Dieser Bohrungsabschnitt mit geringfügig größerem Durchmesser als der Außendurchmesser des Gewindefortsatzes der Antriebswelle bewirkt beim Aufstecken des Wischarmes auf das freie Ende der Antriebswelle eine Zentrierung des Befestigungsteiles und der daran verliersicher gehaltenen Befestigungsmutter in Bezug auf die Antriebswelle. Das vereinfacht auch die Montage des Wischarmes auf der Antriebswelle.

Gemäß Anspruch 34 besitzt das Befestigungsteil an seiner Unterseite koaxial zu der Öffnung des Befestigungsteiles einen axialen hohlzylindrischen Fortsatz. Dieser hohlzylindrische Fortsatz schließt sich also nach unten an die erweiterte Seite der konischen Öffnung des Befestigungsteiles an. Der Innendurchmesser des hohlzylindrischen Fortsatzes entspricht im wesentlichen dem Durchmesser der Antriebswelle, so daß sich der Fortsatz mit seiner Innenfläche auf dem Schaft der Antriebswelle abstützen kann. Diese Maßnahme dient der Ausrichtung des Befestigungsteiles in Relation zur Antriebswelle. Nebenbei wird auch noch die Stabilität der Verbindung von Befestigungsteil und Antriebswelle durch den geschaffenen vergrößerten Formschlußbereich verbessert.

Gemäß Anspruch 35 schließt sich an den ersten in Anspruch 34 beschriebenen hohlzylindrischen Fortsatz ein zweiter hohlzylindrischer Fortsatz in axialer Richtung an. Dieser zweite hohlzylindrische Fortsatz, dessen Innendurchmesser größer ist als der des erstgenannten hohlzylindrischen Fortsatzes, soll im wesentlichen eventuell aus der Fahrzeugkarosserie herausragende Teile des zur Antriebswelle gehörenden Wischlagers überdecken. Damit wird zum einen ein gewisser Schutz des Wischlagers vor dem Zutritt von Schmutz und Feuchtigkeit und zum anderen ein verbesserter Anblick für einen eventuellen Betrachter erreicht.

Die Ansprüche 36 bis 38 beinhalten weitere vorteilhafte Gestaltungsvarianten der Befestigungsmutter.

Gemäß Anspruch 36 besitzt die Befestigungsmutter keinen umlaufenden Bund. Dieser Bund ist durch eine Lochscheibe ersetzt, welche entsprechend stabil ist und an der Befestigungsmutter so angebracht ist, daß sie die Abziehkräfte über die Anschläge auf das Befestigungsteil übertragen kann. Dabei kann die Lochscheibe je nach den geometrischen Bedingungen des Befestigungsteiles oder in Abhängigkeit von den zu übertragenden Kräften eben oder profiliert ausgebildet sein. Gemäß Anspruch 37 ist die Lochscheibe starr an der Befestigungsmutter angebracht. Im Gegensatz dazu ist die Lochscheibe gemäß Anspruch 38 in Relation zur Befestigungsmutter in Umfangsrichtung drehbar aber in axialer Richtung fixiert.

Anspruch 39 ist darauf gerichtet, daß anstelle einer Befestigungsmutter eine Befestigungsschraube als Befestigungsmittel verwendet werden soll, wobei die Befestigungsschraube axial in ein stirnseitig in die Antriebswelle eingebrachtes Innengewinde eingreift. Die Befestigungsschraube ist in annähernder Montageposition am Befestigungsteil analog zu einer Befestigungsmutter unverlierbar gehalten. Der Schaft der Befestigungsschraube ist in der Öffnung des Befestigungsteiles zur Befestigung des Wischarmes auf der Antriebswelle angeordnet, und die Unterseite des Schraubenkopfes liegt auf dem Befestigungsteil bzw. auf einer zwischengelegten Unterlegscheibe auf. Am unteren Rand ist der Schraubenkopf mit einem sich radial erstreckenden umlaufenden Bund oder auch mit einer an ihm befestigten ebenen oder profilierten Lochscheibe ausgestattet. An dem Befestigungsteil sind Anschläge angebracht, die den Bund oder die Lochscheibe übergreifen bzw. über diesem angebracht sind. Beim Herausdrehen der Schraube aus der Antriebswelle gelangen der Bund oder die Lochscheibe mit den Anschlägen in Wirkverbindung, wodurch der Wischarm von der Antriebswelle abgezogen wird.

Gemäß Anspruch 40 besitzt die Befestigungsschraube zur Zentrierung am Ende der Antriebswelle an ihrem dem Schraubenkopf gegenüberliegenden Ende einen zylindrischen Bereich ohne Gewinde. Der Durchmesser dieses zylindrischen Bereiches ist geringfügig kleiner als das Innengewinde, das in das Ende der Antriebswelle stirnseitig eingebracht ist.

Anhand der Zeichnungen werden verschiedene Ausführungsbeispiele der Erfindung beschrieben. In den Zeichnungen zeigen:
- Figur 1 -: einen Wischarm für ein Kraftfahrzeug in teilweiser Schnittdarstellung,
- Figuren 1a - 1e -: verschiedene Varianten von Befestigungsmitteln (Befestigungsmuttern und Befestigungsschrauben),
- Figur 2 -: eine grundlegende Ausführung eines erfindungsgemäßen Wischarmes (Abschnitt),
- Figur 3 -: eine Draufsicht zu Figur 2,
- Figur 3a -: eine Variante für entfernbare Anschläge,
- Figuren 4 - 7 -: vorteilhafte Ausgestaltungen zu der grundlegenden Variante gemäß Figur 2,
- Figur 8 -: eine Variante mit Befestigung der Befestigungs- mutter am Befestigungsteil mittels Klemmbrille,
- Figur 9 -: eine andere Variante für die Befestigung der Befestigungsmutter am Befestigungsteil,
- Figur 9a -: einen Ausschnitt aus Figur 9 in vergrößerter Darstellung,
- Figur 9b -: eine Draufsicht auf Figur 9,
- Figur 10 -: eine andere Variante des erfindungsgemäßen Wischarmes (Abschnitt),
- Figur 11 -: eine weitere Variante des erfindungsgemäßen Wischarmes (Abschnitt),
- Figur 11a -: einen Federring als Einzelteil aus Figur 11 in Draufsicht,
- Figur 12 -: eine Variante eines erfindungsgemäßen Wischarmes mit Befestigungsschraube als Befestigungsmittel, (Abschnitt),
- Figur 13 -: eine Ausführung eines Wischarmes (Abschnitt), der nicht unter den Schutzumfang dieses Patents fällt.
- Figuren 14 - 18 -: andere Ausführungen bzw. Varianten eines erfindungsgemäßen Wischarmes, Schnitt in einer Ebene durch die geometrische Achse der Öffnung im Befestigungsteil und rechtwinklig zur Mittellängsachse des Befestigungsteiles,
- Figur 14a -: eine Lochscheibe aus Figur 14 oder 15 als Einzelteil in perspektivischer Darstellung,
- Figuren 19 - 20 -: andere Ausführungen bzw. Varianten eines erfindungsgemäßen Wischarmes (Abschnitt),
- Figur 20a -: Draufsicht zu Figur 20,
- Figuren 21 - 24a -: weitere Ausführungen eines erfindungsgemäßen Wischarmes mit einem Guß-Befestigungsteil (Abschnitt),
- Figuren 25 - 26a -: weitere Ausführungen eines erfindungsgemäßen Wischarmes mit einem Blech-Befestigungsteil (Abschnitt),
- Figuren 27 - 30a -: weitere Ausführung eines erfindungsgemäßen Wischarmes mit einem Blech-Befestigungsteil mit Gußteileinlage (Abschnitt).

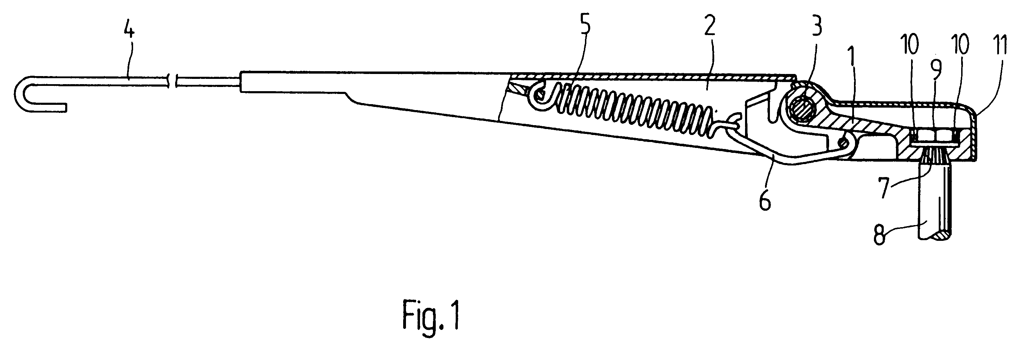

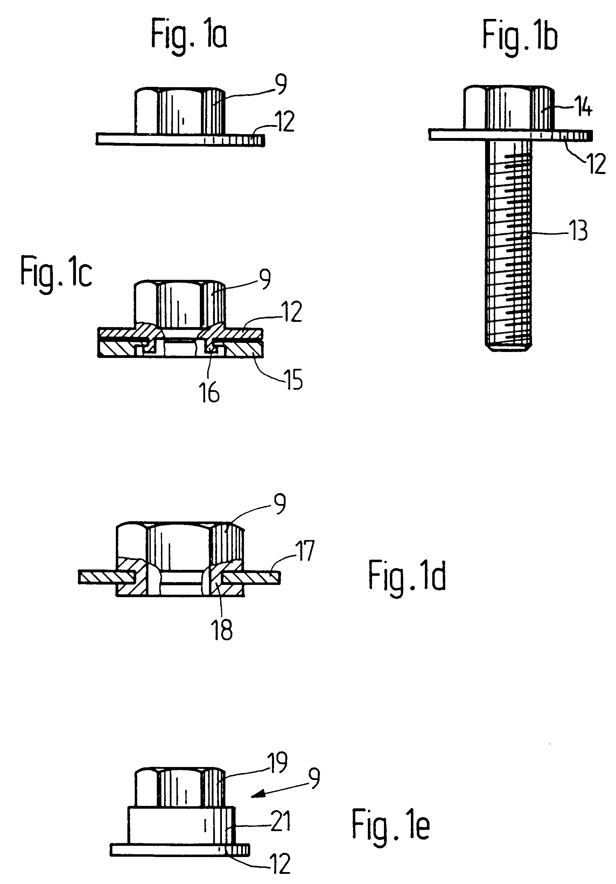

In Figur 1 ist ein erfindungsgemäßer Wischarm teilweise geschnitten dargestellt. Der Wischarm besitzt ein Befestigungsteil 1, an welchem ein im Querschnitt im wesentlichen u-förmiges Gelenkteil 2 um eine senkrecht zur Zeichnungsebene verlaufende Achse 3 schwenkbar angelenkt ist. In an sich bekannter Weise ist in Verlängerung des Gelenkteils 2 eine Wischstange 4 an dem Gelenkteil 2 befestigt. An ihrem freien Ende kann die Wischstange 4 mit einem nicht dargestellten Wischblatt verbunden werden, dessen Wischleiste zur Reinigung der Scheibe bestimmt ist. Eine als Anspreßdruckfeder 5 wirkende Zugfeder ist unter Vorspannung mit einem Ende am Gelenkteil 2 bzw. an dem in das Gelenkteil 2 hineinragende Ende der Wischstange 4 und am anderen Ende mittels eines C-Bügels 6 hinter der Achse 3 am Befestigungsteil 1 eingehängt. Das Befestigungsteil 1 weist an seinem dem Gelenkteil 2 gegenüberliegenden Ende eine Öffnung 7 auf, mit welcher der Wischarm drehfest auf einer Antriebswelle 8 zu befestigen ist. Dazu ist als Befestigungsmittel eine Befestigungsmutter 9 mittels Anschlägen 10 unverlierbar am Befestigungsteil 1 gehalten. Eine Abdeckkappe 11 überdeckt das gesamte Befestigungsteil 1.

Durch eine zwischen zwei Endlagen hin- und herdrehende Bewegung der Antriebswelle 8 ist der Wischarm in eine pendelnde Schwenkbewegung versetzbar, wodurch die Wischleiste das Wischfeld auf der Scheibe überstreicht und reinigt.

In den Figuren 1a bis 1e sind verschiedene Varianten von Befestigungsmitteln dargestellt, die an einem erfindungsgemäßen Wischarm verwendet werden können.

Figur 1a zeigt eine Befestigungsmutter 9, die an ihrem unteren Rand einen sich radial erstreckenden umlaufenden Bund 12 besitzt. Dieser Bund 12 ist einstückig zur übrigen Befestigungsmutter 9 und ist dazu bestimmt, daß er mit darüber angeordneten und mit dem Befestigungsteil 1 verbundenen Anschlägen 10 zusammenwirken kann.

Figur 1b zeigt eine Befestigungsschraube 13, die am unteren Rand des Schraubenkopfes 14 analog zu der Befestigungsmutter 9 aus Figur 1a einen sich radial erstreckenden umlaufenden Bund 12 besitzt, welcher auch die gleiche Funktion ausübt.

Figur 1c zeigt eine Befestigungsmutter 9 mit dem Aufbau wie in Figur 1a. Zusätzlich ist eine Unterlegscheibe 15 in Umfangsrichtung relativ zur Befestigungsmutter 9 drehbar an der Unterseite der Befestigungsmutter 9 gehalten. Dazu ist ein axialer Fortsatz 16 der Befestigungsmutter 9, welcher durch das abgesetzte Loch der Unterlegscheibe 15 greift, am äußeren Rand auswärts umgebördelt Der umgebördelte Rand hintergreift lediglich die erste Stufe des Loches der Unterlegscheibe 15, so daß er nicht über die Unterseite der Unterlegscheibe 15 hervorsteht. Zwischen der Unterseite der Befestigungsmutter 9 und der Unterlegscheibe 15 besteht zumindest ein geringes Spiel.

Figur 1d zeigt eine Befestigungsmutter 9, bei welcher im Vergleich mit Figur 1a der Bund 12 durch eine stabile Lochscheibe 17 ersetzt ist, welche als gesondertes Teil an der Unterseite der Befestigungsmutter 9 befestigt ist. Dazu erstreckt sich ein axialer Fortsatz 18 von der Unterseite der Befestigungsmutter 9 durch das Loch der Lochscheibe 17, und der hindurchragende Teil des Fortsatzes 18 ist nach außen um den Rand des Loches der Lochscheibe 17 herumgezogen. Die Unterseite des herumgezogenen Fortsatzes 18 ist eben ausgebildet. Die Lochscheibe 17 kann je nach Erfordernis eben oder profiliert ausgebildet sein. Mit gestrichelten Linien ist eine tellerförmige Lochscheibe 17 angedeutet, deren unterer Rand etwa in der gleichen Ebene liegt wie die Unterseite des Fortsatzes 18. Je nach Erfordernis kann die Lochscheibe 17 starr oder in Umfangsrichtung relativ verdrehbar an der Befestigungsmutter 9 befestigt sein.

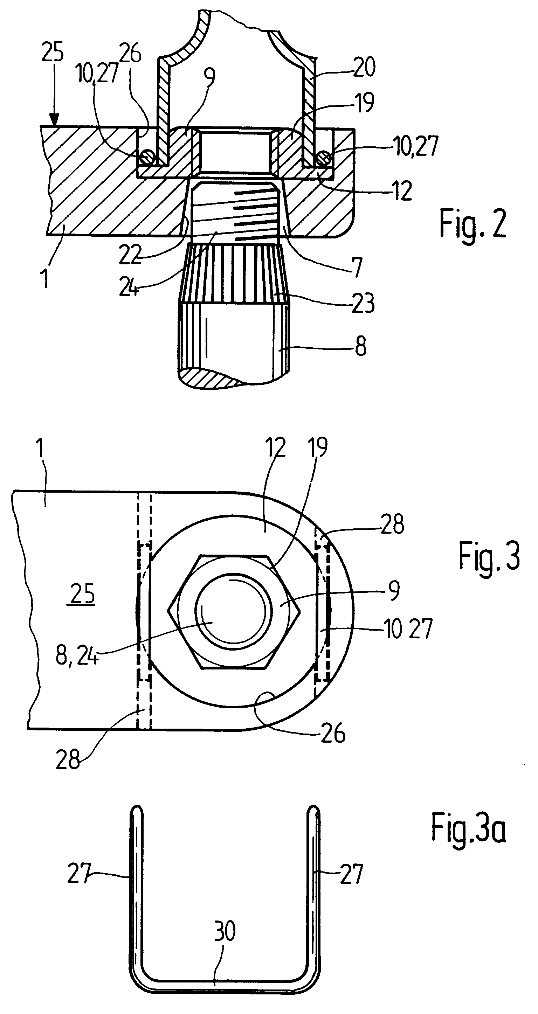

Figur 1e zeigt schließlich eine Befestigungsmutter 9 mit einstückigem, umlaufendem Bund 12, welche zwischen dem Bund 12 und dem Angriffsteil 19 für einen Mutternschlüssel 20 (siehe Figur 2) einen zylindrischen Schaft 21 besitzt. Der Durchmesser des zylindrischen Schaftes 21 ist kleiner als der des Bundes 12 aber größer als die Weite des Angriffsteiles 19. Dieser zylindrische Schaft 21 bildet eine Auflage bzw. einen Anschlag für den Mutternschlüssel 20.

Die Figuren 2 und 3 beziehen sich auf eine grundlegende Variante der erfindungsgemäßen Lösung, wobei hier der wesentliche Abschnitt des Befestigungsteiles 1 dargestellt ist. Deutlich ist die Öffnung 7 für die Befestigung des Befestigungsteiles 1 auf der Antriebswelle 8 zu erkennen. Diese Öffnung 7 ist als Innenkonus 22 ausgebildet, wohingegen der korrespondierende Endbereich der Antriebswelle 8 als Außenkonus 23 ausgebildet ist. Stirnseitig schließt sich an den Außenkonus 23 der Antriebswelle 8 ein Gewindeansatz 24 an. Konzentrisch zu der Öffnung 7 ist in der Oberseite 25 des Befestigungsteiles 1 eine Ausnehmung 26 mit ebenem Boden eingebracht. Die Öffnung 7 mündet mit der verjüngten Seite des Innenkonus 22 zentrisch in den Boden der Ausnehmung 26 ein. Die Befestigungsmutter 9 ist mit ihrer Unterseite auf dem Boden der Ausnehmung 26 angeordnet, so daß sie sich zumindest annähernd in Montageposition befindet. In Montageposition befindet sich die Befestigungsmutter 9 in axialer Verlängerung und in koaxialer Ausrichtung zu der Öffnung 7. Die zumindest annähernde koaxiale Ausrichtung der Befestigungsmutter 9 wird dadurch erreicht, daß zwischen dem äußeren Rand des Bundes 12 der Befestigungsmutter 9 und der Wand der Ausnehmung 26 lediglich ein geringes Spiel besteht. Mit etwas Spiel sind die Anschläge 10 über dem Bund 12 der Befestigungsmutter 9 an dem Befestigungsteil 1 angebracht. Die Anschläge 10 werden von zwei Stiften 27 mit Kreisquerschnitt gebildet, die in entsprechende fluchtende Bohrungen 28 (siehe Fig. 3) in der die Ausnehmung 26 umgebenden Wandung eingesetzt sind. Entgegen der in den Figuren 2 und 3 gewählten Anordnung können die Bohrungen 28 und somit die Stifte 26 parallel zur Längsachse 29 des Befestigungsteiles 1 ausgerichtet sein.

Die Stifte 27 halten im Zusammenwirken mit der Ausnehmung 26 die Befestigungsmutter 9 zumindest annähernd in Montageposition unverlierbar am Befestigungsteil 1. Außerdem wirken die Stifte 27 als Anschläge 10 und gewährleisten somit die Abziehfunktion der Befestigungsmutter 9. In Figur 2 ist zusätzlich ein Mutternschlüssel 20 angedeutet, der auf die Befestigungsmutter 9 aufgesteckt ist. In Figur 2 ist das Befestigungsteil 1 in einer Position am Beginn der Montage auf der Antriebswelle 8 dargestellt.

In Figur 3a sind zwei als Anschläge 10 dienende Stifte 27 abgebildet. Die Stifte 27 sind in einem Abstand voneinander im wesentlichen parallel angeordnet und an einem Ende mittels eines Verbindungssteges 30 gabelförmig miteinander verbunden. Dieses so gebildete, gabelförmige Anschlagteil ist so bemessen, daß es anstelle der beiden separaten Stifte 27 in Figur 2 und 3 in die fluchtenden Bohrungen 28 einsteckbar ist. Wenn man die Stifte 27 abweichend von einer exakten parallelen Ausrichtung mit ihren freien Enden geringfügig zusammen- oder auseinanderlaufen läßt, wird eine gewisse elastische Vorspannung erzeugt, welche das gabelförmige Anschlagteil mit ausreichender Sicherheit in den Bohrungen 28 des Befestigungsteiles 1 halten kann. Nach der Montage des Wischarmes auf der Antriebswelle 8, kann das gabelförmige Anschlagteil durch einfaches Herausziehen aus den Bohrungen 28 von dem Befestigungsteil 1 entfernt werden, da es im angebauten Zustand des Wischarmes nicht benötigt wird. Wenn der Wischarm von der Antriebswelle 8, aus welchen Gründen auch immer, entfernt werden muß, steckt man das gabelförmige Anschalgteil wieder in die fluchtenden Bohrungen 28 ein. So gewährleistet es die Abziehfunktion der Befestigungsmutter 9 und hält diese nach dem Entfernen des Wischarms von der Antriebswelle 8 in der beschriebenen Weise am Befestigungsteil 1.

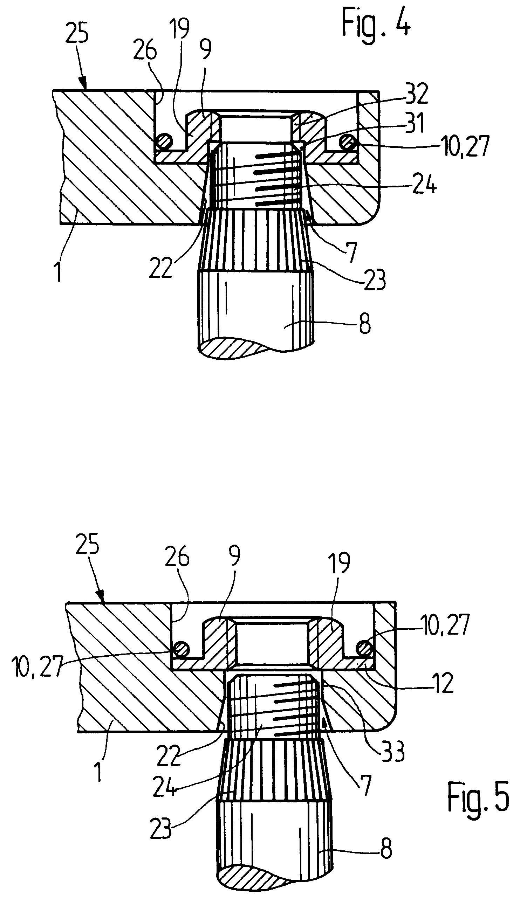

Das Ausführungsbeispiel in Figur 4 gleicht im wesentlichen dem von Figur 2, jedoch besitzt die Befestigungsmutter 9 an ihrer Unterseite einen kurzen zylindrischen Bohrungsabschnitt 31, an den sich das Mutterngewinde 32 anschließt. Der Durchmesser des Bohrungsabschnittes 31 ist etwas größer als der Außendurchmesser des Gewindeansatzes 24 der Antriebswelle 8. Dadurch wird die Montage des Wischarmes auf der Antriebswelle 8 durch eine selbsttätige Zentrierung der Befestigungsmutter 9 in Bezug auf den Gewindeansatz 24 erleichtert. Aus Figur 4 ist ersichtlich, welche Position das Befestigungsteil 1 und die Befestigungsmutter 9 zu der Antriebswelle 8 einnehmen, bevor das Aufschrauben der Befestigungsmutter 9 auf den Gewindeansatz 24 beginnt.

Das in Figur 5 dargestellte Ausführungsbeispiel gleicht wiederum im wesentlichen dem von Figur 2. Zwecks Montageerleichterung schließt sich in der Öffnung 7 an der verjüngten Seite des Innenkonus 22 ein kurzer zylindrischer Bohrungsabschnitt 33 an. Dieser Bohrungsabschnitt 33 mit geringfügig größerem Durchmesser als der Außendurchmesser des Gewindeansatzes 24 bewirkt eine Zentrierung des Befestigungsteiles 1 in Bezug auf die Antriebswelle 8 bei der Wischarmmontage.

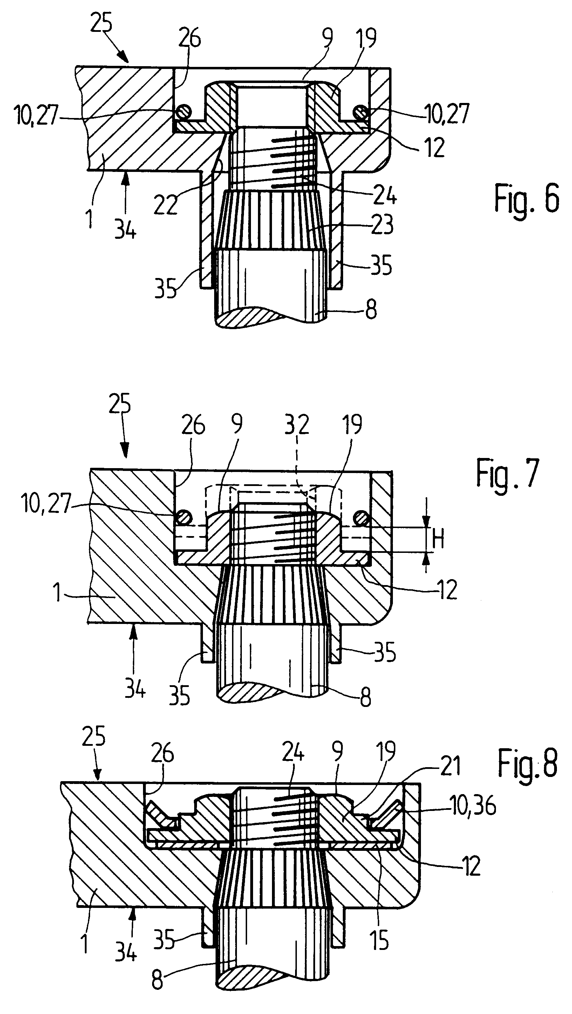

Figur 6 zeigt ein ähnliches Ausführungsbeispiel wie Figur 2. In diesem Fall besitzt das Befestigungsteil 1 jedoch an seiner Unterseite 34 in axialer Verlängerung an die erweiterte Seite des Innenkonus 22 einen einstückig angeformten hohlzylindrischen Fortsatz 35. Dieser Fortsatz 35 ist so bemessen, daß er eine Zentrierung des Befestigungsteiles 1 in Bezug auf die Antriebswelle 8 bei der Wischarmmontage bewirkt. Außerdem kann sich der Fortsatz 35 mit seiner Innenfläche auf dem Schaft der Antriebswelle 8 abstützen und damit zusätzlich ein Kippen des Befestigungsteiles 1 auf der Antriebswelle 8 verhindern.

Das in Figur 7 dargestellte Ausführungsbeispiel entspricht im wesentlichen dem von Figur 6. Zur Erleichterung der Wischarmmontage, insbesondere des Ansetzens des Mutterngewindes 32 an dem Gewindeansatz 24, wird hier der Befestigungsmutter 9 eine gewisse zusätzliche Beweglichkeit in axialer Richtung eingeräumt.

Dazu sind die Anschläge 10, welche von den Stiften 27 gebildet werden, in einer Höhe H über dem Bund 12 der Befestigungsmutter 9 angeordnet. Dabei muß die Höhe H kleiner sein als die Einschraubtiefe des Gewindeansatzes 24 in die Befestigungsmutter 9. Nur dadurch wird gewährleistet, daß bei der Wischarmdemontage der Bund 12 der Befestigungsmutter 9 in Wirkverbindung mit den Anschlägen 10 gelangt, bevor die Befestigungsmutter 9 vollständig vom Gewindeansatz 24 abgeschraubt ist (diese Position der Befestigungsmutter 9 ist in Figur 7 gestrichelt gezeichnet). Es steht noch ausreichend Gewinde des Gewindeansatzes 24 zur Verfügung, um mittels der Befestigungsmutter 9 das Befestigungsteil 1 von seinem festen Sitz auf der Antriebswelle 8 abzuziehen.

Bei den Ausführungsbeispielen der Figuren 2 - 7 ist es natürlich ebensogut möglich, zwischen Befestigungsteil 1 und Befestigungsmutter 9 eine Unterlegscheibe 15 anzuordnen oder eine Befestigungsmutter 9 gemäß einer der Figuren 1c - 1e zu verwenden.

In Figur 8 ist ein Ausführungsbeispiel dargestellt, bei welchem das Befestigungsteil 1 auf die Antriebswelle 8 montiert dargestellt ist. In die Ausnehmung 26 in der Oberseite 25 des Befestigungsteils 1 sind eine Unterlegscheibe 15 und eine Befestigungsmutter 9 gemäß Figur 1e eingelegt. Den Anschlag 10 bildet eine ringförmige Klemmbrille 36, die über dem Bund 12 der Befestigungsmutter 9 mit ihrem äußeren Rand an der Wand der Ausnehmung 26 festgelegt ist und mit ihrem inneren Rand den Bund 12 der Befestigungsmutter 9 übergreift. Zwischen dem Bund 12 und dem inneren Rand der Klemmbrille 36 besteht ein geringes Spiel. Der zylindrische Schaft 21 der Befestigungsmutter 9 befindet sich in dem Loch der Klemmbrille 36 und überragt etwas deren Oberseite. Dadurch ist es nicht möglich, mit einem aufgesetzten Mutternschlüssel (der hier nicht dargestellt ist) auf die Klemmbrille 36 zu drücken und deren Lage zu beeinflussen. An der Unterseite 34 des Befestigungsteiles 1 befindet sich wiederum ein hohlzylindrischer Fortsatz 35 mit der bereits beschriebenen Funktion. Die Klemmbrille 36 ist ausreichend stabil und ausreichend fest in der Wand der Ausnehmung 26 verankert, um die Abziehfunktion der Befestigungsmutter 9 zu gewährleisten.

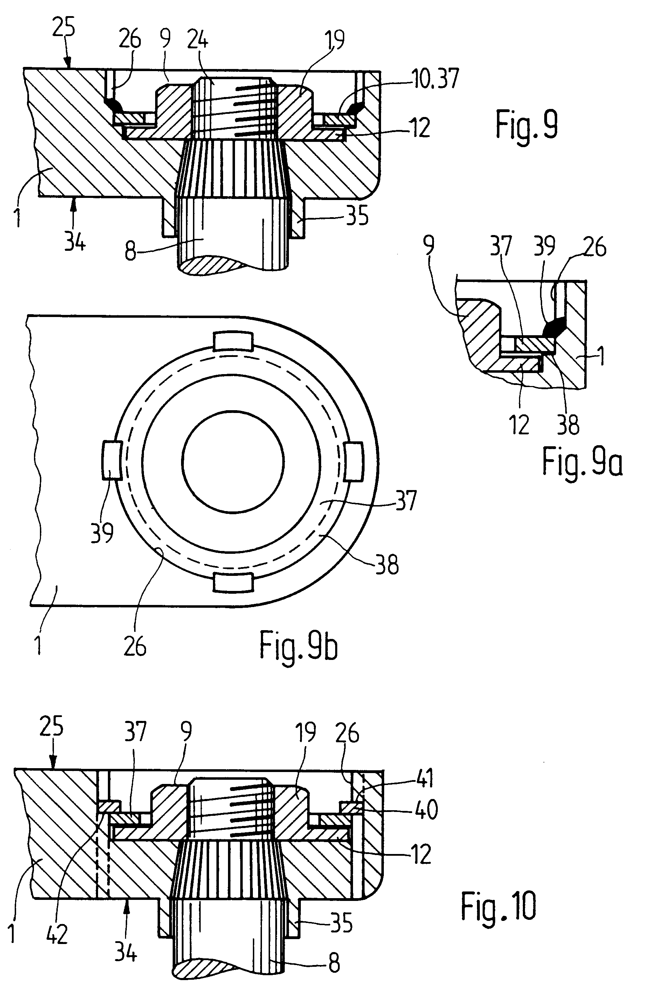

In den Figuren 9, 9a, 9b ist ein ähnliches Ausführungsbeispiel dargestellt wie in Figur 8, wobei in Figur 9a ein vergrößerter Ausschnitt aus Figur 9 dargestellt ist. Bei diesem Ausführungsbeispiel wurde eine einfache Befestigungsmutter 9 mit umlaufendem Bund 12 verwendet, und auf eine Unterlegscheibe 15 wurde verzichtet. Als Anschlag 10 ist eine Lochscheibe 37 über dem Bund 12 der Befestigungsmutter 9 angeordnet und an der Wand der Ausnehmung 26 festgelegt. Die Lochscheibe 37 besitzt kreisringförmige Gestalt und ist, wie insbesondere aus Figur 9a ersichtlich, mit dem auswärtsliegenden Teil ihrer Unterseite auf einem Absatz. 38 angeordnet, der sich am bodenseitigen Rand der Ausnehmung 26 befindet. Die Höhe des Absatzes 38 ist so bemessen, daß der einwärtsliegende Teil der Lochscheibe 37 den Bund 12 der Befestigungsmutter 9 mit etwas Spiel übergreift. An ihrem äußeren Rand, der an der Wandung der Ausnehmung 26 anliegt, ist die Lochscheibe 37 durch Materialverformungen 39, die durch Verstemmen oder dergleichen erzeugt wurden, an der Wand der Ausnehmung 26 festgelegt. Aus Figur 9b, in welcher die Befestigungsmutter 9 und die Antriebswelle 8 nicht dargestellt sind, ist ersichtlich, daß die Lochscheibe 37 an vier über den Umfang verteilten Stellen durch Materialverformung 39 festgelegt ist. Damit ist eine ausreichende Befestigung der Lochscheibe 37 gegeben, so daß die Abziehfunktion der Befestigungsmutter 9 gewährleistet ist.

In Figur 10 ist ein ähnliches Ausführungsbeispiel wie in Figur 9 dargestellt. Im Unterschied zu Figur 9 liegt bei Figur 10 eine Lochscheibe 37 lose auf dem Bund 12 der Befestigungsmutter 9 auf, wobei die Lochscheibe 37 mit ihrem äußeren Rand lose an der Wand der Ausnehmung 26 anliegt. Über der Lochscheibe 37 ist eine Sicherungsscheibe 40 angeordnet und an der Wand der Ausnehmung 26 festgelegt. Das Festlegen der Sicherungsscheibe 40 in axialer Richtung erfolgt dabei durch Vorsprünge 41 bzw. Rücksprünge 42, die über den Umfang verteilt wechselweise an der Wand der Ausnehmung 26 angeordnet sind.

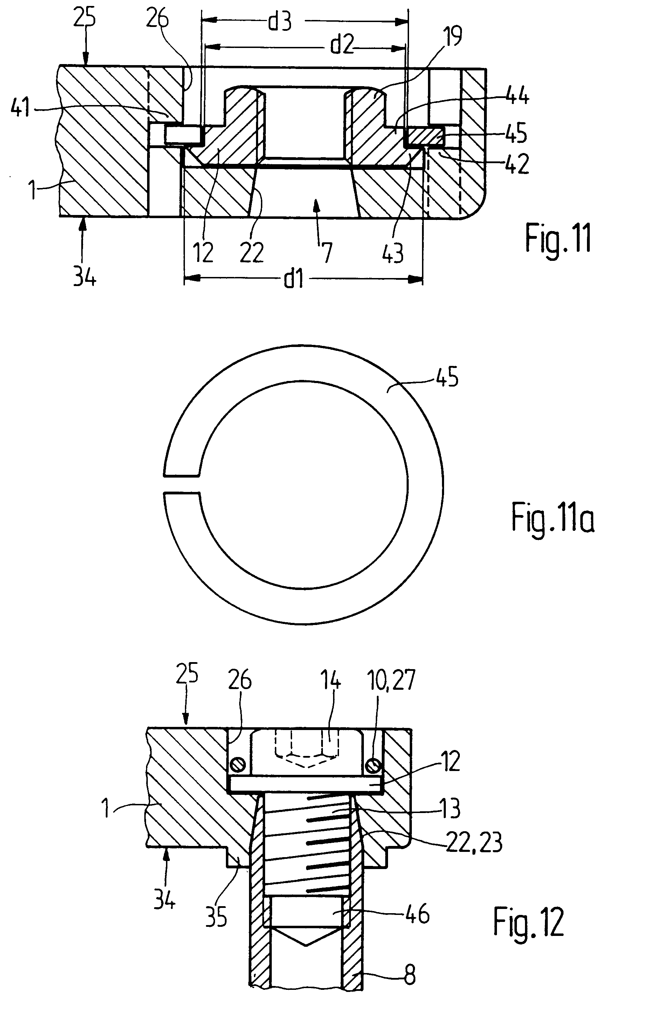

Figur 11 zeigt ein weiteres Beispiel dafür, wie die Befestigungsmutter 9 am Befestigungsteil 1 in der Ausnehmung 26 gehalten werden kann. In diesem Fall ist der zylindrische Bund 12 der Befestigungsmutter 9 stufenartig ausgebildet. Der Durchmesser d1 des unteren Teiles 43 des Bundes 12 ist größer als der Durchmesser d2 der Stufe 44 des Bundes 12, und der untere Teil 43 des Bundes ist nach unten konisch verjüngt. In einer bestimmten Höhe über dem Boden der Ausnehmung 26 ist ein radial aufgeschnittener Federring 45 durch über den Umfang abwechselnd verteilte Vorsprünge 41 und Rücksprünge 42 in axialer Richtung abgestützt, jedoch in radialer Richtung beweglich an der Wand der Ausnehmung 26 gehalten. Die Befestigungsmutter 9 ist mit ihrem unteren, konisch ausgebildeten Teil 43 unter vorübergehender Aufweitung des Federringes 45 durch dessen Loch hindurchgedrückt, bis der Federring 45 auf der Stufe 44 des Bundes seine ursprüngliche Form und Größe wieder eingenommen hat. Dabei ist der Durchmesser d2 der Stufe geringfügig kleiner als der Durchmesser d3 des Loches des Federringes 45, und die Höhe des Federringes 45 über dem Boden der Ausnehmung 26 ist so gewählt, daß der Federring 45 den unteren Teil 43 des Bundes 12 mit etwas Spiel übergreift. Die Höhe der Stufe 44 des Bundes 12 ist so gewählt, daß die Stufe 44 mit der Oberseite des Federringes 45 abschließt oder diese geringfügig überragt. Zur besseren Veranschaulichung ist in Figur 11 a der Federring 45 allein in Draufsicht dargestellt.

Figur 12 zeigt ein Ausführungsbeispiel, bei welchem eine Befestigungsschraube 13 für die Befestigung eines Wischarmes auf einer Antriebswelle 8 verwendet wird. Das Befestigungsteil 1 des Wischarmes ist als Gußteil hergestellt und in seine Oberseite 25 ist wiederum die Ausnehmung 26 eingebracht. Die Befestigungsschraube 13 besitzt einen zylindrischen Schraubenkopf 14, der mit einem Innensechskant oder dergleichen für den Angriff eines entsprechenden Werkzeuges ausgestattet ist. An dem unteren Rand des Schraubenkopfes 14 ist ein umlaufender Bund 12 angeformt. An dem freien Ende des Gewindeschaftes der Befestigungsschraube 13 befindet sich ein kurzer zylindrischer Bereich 46, der kein Gewinde trägt. Der Durchmesser dieses zylindrischen Bereiches 46 ist kleiner als der des Innengewindes, das in das Ende der als Hohlwelle ausgebildeten Antriebswelle 8 eingebracht ist. Dieser zylindrische Bereich 46 dient der Zentrierung der Befestigungsschraube 13 in Bezug auf das Innengewinde der Antriebswelle 8 bei der Montage des Wischarmes auf die Antriebswelle 8. Die Befestigungsschraube 13 ist mit ihrem Gewindeschaft in dem Innenkonus 22 des Befestigungsteiles 1 und gleichzeitig mit ihrem Bund 12 und ihrem Schraubenkopf 14 in der Ausnehmung 26 des Befestigungsteiles 1 angeordnet. Zwei Stifte 27 sind in der zur Figur 2 beschriebenen Art und Weise über dem Bund 12 der Befestigungsschraube 13 angeordnet und an dem Befestigungsteil 1 gehalten. Damit ist die Abziehfunktion der Befestigungsschraube 13 gewährleistet. An der Unterseite 34 des Befestigungsteiles 1 befindet sich wiederum ein hohlzylindrischer Fortsatz 35, welcher der Zentrierung und der Abstützung des Befestigungsteiles 1 auf der Antriebswelle 8 dient.

Das in Figur 13 gezeigte und nachfolgend beschriebene Ausführungsbeispiel fällt nicht unter den Schutzumfang dieses Patents, es dient jedoch der Bereicherung des Standes der Technik im Hinblick auf einen Wischarm, dessen Befestigungsmutter 9 bereits in annähernder Montageposition unverlierbar am Befestigungsteil 1 gehalten und in der Lage ist, eine Abziehfunktion im Hinblick auf eine Demontage des Wischarmes von seiner Antriebswelle 8 auszuüben.

Aus Figur 13 ist ein Befestigungsteil 1 ersichtlich, welches aus einem Blechteil 47 und einer Gußteileinlage 48 zusammengesetzt ist. Das Blechteil 47 besitzt einen im wesentlichen u-förmigen Querschnitt mit einem Rückenteil 49, wobei der Querschnitt des Blechteiles 47 nach unten geöffnet ist. Die Gußteileinlage 48 ist von unten formschlüssig in das Blechteil 47 eingesetzt und durch umgebogene Bereiche des Blechteiles 47 in Form von Befestigungslappen 50 an diesem gehalten. Die Gußteileinlage 48 beinhaltet die Öffnung 7 für die Befestigung des Wischarmes auf der Antriebswelle 8. An der Unterseite 34 der Gußteileinlage 48 befindet sich wieder ein hohlzylindrischer Fortsatz 35 mit der bereits beschriebenen Funktion. An der Obersseite der Gußteileinlage 48 ist eine die Öffnung 7 umgebende Ausnehmung 51 vorgesehen, in welcher der Bund 12 der Befestigungsmutter 9 angeordnet ist. Konzentrisch zu der Öffnung 7 ist in das Rückenteil 49 des Blechteiles 47 ein Durchbruch 52 eingebracht. Der Rand dieses Durchbruches 52 übergreift den Bund 12 der Befestigungsmutter 9 und wirkt somit als Anschlag 10. Dadurch wird die Abziehfunktion der Befestigungsmutter 9 gewährleistet. Das Angriffsteil 19 der Befestigungsmutter 9 ragt nach oben durch den Durchbruch 52 hindurch, so daß dort ein Mutternschlüssel angreifen kann.

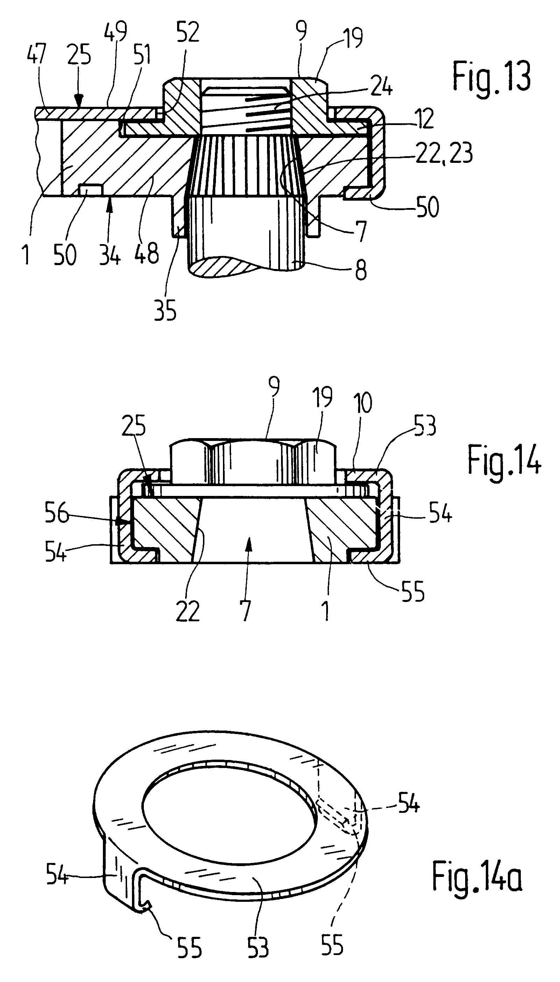

Bei dem in Figur 14 gezeigten Ausführungsbeispiel liegt die Befestigungsmutter 9 mit ihrer Unterseite auf der Oberseite 25 des Befestigungsteiles 1 auf. Dabei ist die Befestigungsmutter 9 zumindest nahezu koaxial zu der Öffnung 7 mit dem Innenkonus 22 ausgerichtet. Eine Lochscheibe 53, die in Figur 14a für sich allein perspektivisch dargestellt ist, ist über dem Bund 12 der Befestigungsmutter 9 so angeordnet, daß sie den Bund 12 radial übergreift. Die Lochscheibe 53 besitzt zwei Befestigungsabschnitte 54, die gegenüberliegend an ihrem äußeren Rand einstückig angeformt sind. Die Befestigungsabschnitte 54 erstrecken sich in axialer Richtung entlang der Seitenwände 56 des Befestigungsteiles 1 nach unten, und die Enden 55 der Befestigungsabschnitte 54 sind dann derart nach innen umgebogen, daß sie die Unterseite des Befestigungsteiles 1 untergreifen. Aus Figur 14 ist ersichtlich, daß in die Seitenwände 56 und in die unteren Ränder des Befestigungsteiles 1 Ausnehmungen eingebracht sind, in welchen die Befestigungsabschnitte 54 verlaufen bzw. die Enden 55 angeordnet sind. Damit ist die Lochscheibe 53 derartig fest an dem Befestigungsteil 1 festgelegt, daß die Abziehfunktion der Befestigungsmutter 9 gewährleistet ist. Das Angriffsteil 19 der Befestigungsmutter 9 ragt nach oben aus dem Loch der Lochscheibe 53 heraus, so daß dort ein Mutternschlüssel angreifen kann.

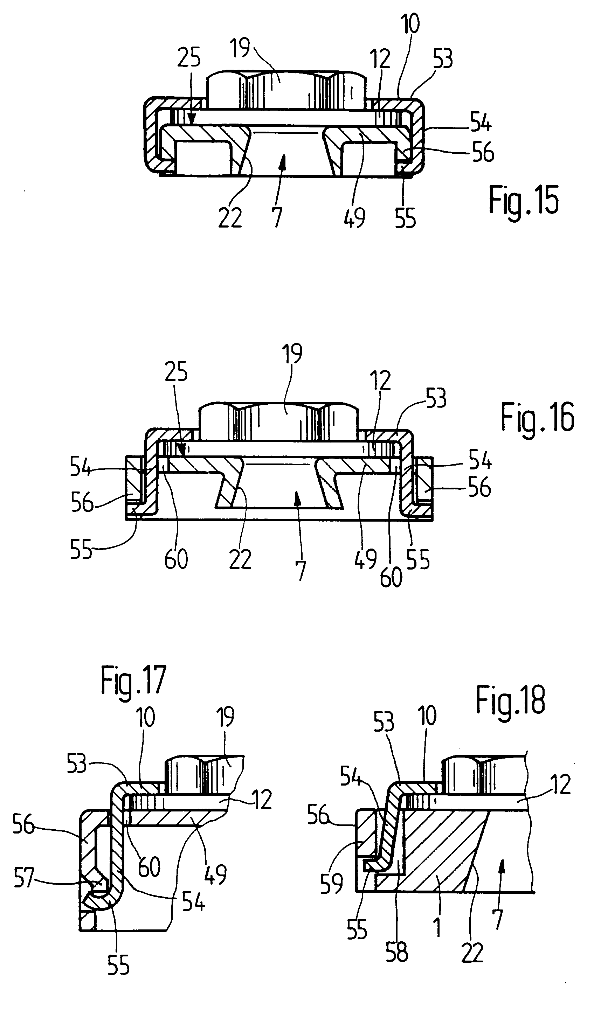

Die in Figur 15 dargestellte Ausführung entspricht im wesentlichen der aus Figur 14, wobei hier das Befestigungsteil 1 als Blechteil gefertigt ist. Die Befestigungsmutter 9 liegt auf der Oberseite 25 des Befestigungsteiles 1 auf. Die Lochscheibe 53 ist auf dem Bund 12 der Befestigungsmutter 9 angeordnet und übergreift diesen radial. Die beiden Befestigungsabschnitte 54 der Lochscheibe 53 verlaufen in axialer Richtung nach unten entlang der Seitenwände 56 des Befestigungsteiles 1. Die Enden 55 der Lochscheibe 53 sind jeweils nach innen gebogen und untergreifen den Rand der Seitenwand 56, wobei am unteren Rand der Seitenwand 56 eine Ausnehmung vorhanden ist, in welche das Ende 55 des Befestigungsabschnittes 54 eingreift. Die Lochscheibe 53 wirkt wiederum als Anschlag 10 für die Befestigungsmutter 9, wodurch die Abziehfunktion der Befestigungsmutter 9 gewährleistet ist. Das Angriffsteil 19 der Befestigungsmutter 9 durchgreift das Loch der Lochscheibe 53 nach oben.

In Figur 16 ist wiederum ein Befestigungsteil 1 dargestellt, welches als Blechteil gefertigt ist. Die Befestigungsmutter 9 ist auf dem Rückenteil 49, d. h. der Oberseite 25 des Befestigungsteiles 1, in koaxialer Ausrichtung zu der Öffnung 7 angeordnet. Die über dem Bund 12 der Befestigungsmutter 9 angeordnete Lochscheibe 53 übergreift den Bund 12 radial. Die Befestigungsabschnitte 54 der Lochscheibe 53 durchgreifen entsprechende Durchbrüche im Rückenteil 49 des Befestigungsteiles 1, und ihre nach außen gebogenen Enden 55 untergreifen jeweils den unteren Rand einer Seitenwand 56 des Befestigungsteiles 51, wobei sie in eine entsprechende Ausnehmung am unteren Rand der Seitenwand 56 eingreifen. Damit ist die Befestigung der Befestigungsmutter 9 und deren Abziehfunktion in ausreichendem Maße gewährleistet.

Die Ausführung in Figur 17 unterscheidet sich von der Ausführung 16 hauptsächlich dadurch, daß das Ende 55 des Befestigungsabschnittes 54 der Lochscheibe 53 nicht die Seitenwand 56 des Befestigungsteiles 1 untergreift, sondern einen von der Seitenwand 56 nach innen abstehenden Vorsprung 57. Dieser Vorsprung 57 wird von einem Abschnitt der Seitenwand 56 des Blechteiles gebildet, welcher an drei Seiten von dem Blechteil abgetrennt und dann nach innen abgekröpft ist. Vorteilhaft ist es, wenn, wie aus Figur 17 ersichtlich, die innere Oberseite des Vorsprunges 57 schräg nach unten verläuft. Dadurch kann bei der Montage der Lochscheibe 53 das Ende 55 durch die gebildete Schräge nach innen ausgelenkt werden, und der Befestigungsabschnitt 54 kann nach Überwinden des Vorsprunges 57 mit seinem Ende 55 dem Vorsprung 57 hinterrasten.

In Figur 18 ist ein Befestigungsteil 1 dargestellt, welches als Gußteil gefertigt ist. Auf der Oberseite 25 des Befestigungsteiles 1 ist wiederum die Befestigungsmutter 9 angeordnet, wobei die Lochscheibe 53 den Bund 12 der Befestigungsmutter g übergreifend über diesem angeordnet ist. Für jeden Befestigungsabschnitt 54 der Lochscheibe 53 ist in die Oberseite 25 des Befestigungsteiles 1 ein Kanal 58 eingebracht. Der Kanal 58 erstreckt sich in axialer Richtung nach unten und ist dann nach auswärts geöffnet, so daß ein Vorsprung 59 gebildet wird. Der Befestigungsabschnitt 54 der Lochscheibe 53 durchgreift diesen Kanal 58, und das nach außen gebogene Ende 55 des Befestigungsabschnittes 54 greift unter den Anschlag 59. Damit ist wiederum die Befestigung der Befestigungsmutter 9 und deren Abziehfunktion gewährleistet.

Bei den Varianten gemäß Figuren 14 bis 18 ist ersichtlich, daß die Enden 55 der Befestigungsabschnitte 54 relativ kurz sein können und trotzdem ihre Funktion erfüllen. Bei diesen Ausführungen ist es sinnvoll, die Befestigungsabschnitte 54 federnd auszubilden. Zusätzlich sollten die Enden 55 der Befestigungsabschnitte 54 und die zu hinterrastenden Teile bzw. Vorsprünge mit entsprechenden Auflaufschrägen ausgestattet sein. Durch diese Maßnahmen wird die Befestigung der Befestigungsmutter 9 am Befestigungsteil 1 wesentlich vereinfacht. Die Befestigungsmutter 9 muß nur auf die Oberseite 25 des Befestigungsteiles 1 aufgelegt werden, und die Lochscheibe 53 wird in axialer Richtung auf das Befestigungsteiles 1 aufgesteckt, bis die Enden 55 der Befestigungsabschnitte 54 die entsprechenden Abschnitte des Befestigungsteiles 1 hinterrasten. Ein nachträgliches Umbiegen der Enden 55 der Befestigungsabschnitte 54 ist nicht erforderlich.

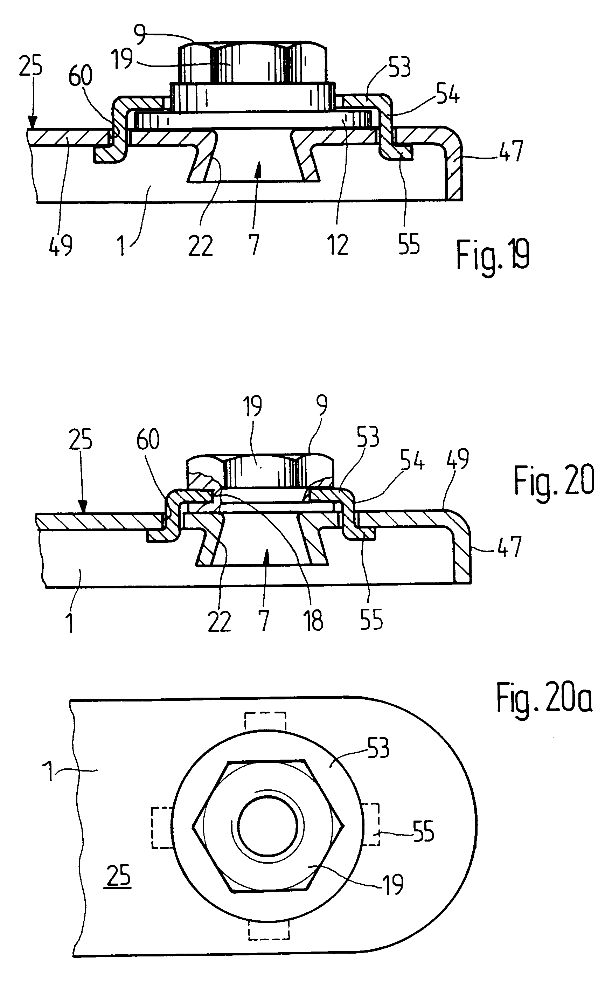

Figur 19 zeigt wiederum ein Befestigungsteil 1, welches als Blechteil 47 hergestellt ist. Die verwendete Befestigungsmutter 9 entspricht der Ausführung gemäß Figur 1e. Die Befestigungsmutter 9 ist auf der Oberseite 25 des Rückenteiles 45 konzentrisch zu der als Innenkonus 22 ausgebildeten Öffnung 7 angeordnet. Eine Lochscheibe 53 gemäß Figur 14a ist den Bund 12 der Befestigungsmutter 9 radial übergreifend an dem Blechteil 47 befestigt. Die Befestigung erfolgt mittels der Befestigungsabschnitte 54 der Lochscheibe 53. Für eine gleichmäßige Verteilung der Abziehkräfte ist es vorteilhaft, wenn die Lochscheibe 53 über ihren Umfang gleichmäßig verteilt vier Befestigungsabschnitte 54 besitzt. Jeder Befestigungsabschnitt 54 ragt durch einen Durchbruch 60 im Rückenteil 49 des Blechteiles 47, wobei die Durchbrüche 60 neben dem Bund 12 der Befestigungsmutter 9 in den Rückteil 49 eingebracht sind. Die Enden 55 der Befestigungsabschnitte 54 sind nach radial auswärts umgebogen und untergreifen die Unterseite des Rückenteiles 49. Damit wird die Befestigungsmutter 9 verliersicher in annähernder Montageposition an dem Befestigungsteil 1 gehalten und außerdem ihre Abziehfunktion gewährleistet. Der zylindrische Schaft 21 der Befestigungsmutter 9 ist im wesentlichen innerhalb des Loches der Lochscheibe 53 angeordnet und überragt geringfügig die Oberseite der Lochscheibe 53. Der Angriffsteil 19 der Befestigungsmutter 9 ist somit oberhalb der Lochscheibe 53 für einen Mutternschlüssel frei zugänglich. Durch den zylindrischen Schaft 21 wird verhindert, daß der Mutternschlüssel die Lochscheibe 53 beschädigen kann. Außerdem kann der Spalt zwischen dem zylindrischen Schaft 21 und dem Rand des Loches in der Lochscheibe 53 sehr gering gehalten werden.

Die Ausführung gemäß der Figuren 20 und 20a unterscheidet sich von der in Figur 19 im wesentlichen dadurch, daß hier eine Befestigungsmutter 9 gemäß Figur 1d verwendet wird, an der die Lochscheibe 53 unmittelbar befestigt ist. Gegenüber der Ausführung nach Figur 19 besteht bei der Ausführung nach Figur 20 der Vorteil einer vereinfachten Handhabung der Befestigungsmutter 9 bei ihrer Montage am Befestigungsteil 1. Außerdem ist diese Ausführung für wesentlich schmalere Wischarme anwendbar, da die Lochscheibe 53 bezogen auf die Oberseite 25 des Befestigungsteiles 1 wesentlich weniger breit auslädt.

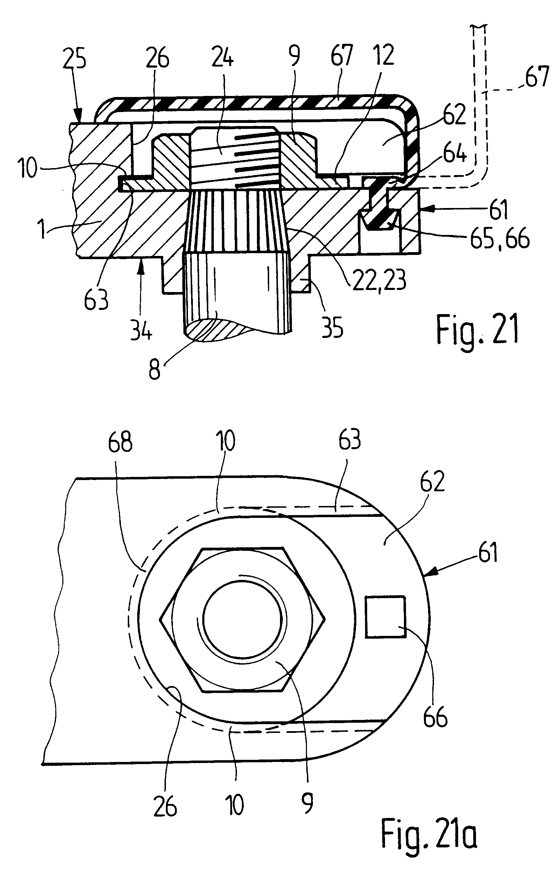

Eine andere grundlegende Ausführung der Erfindung ist aus den Figuren 21 und 21a ersichtlich. Hier ist das Befestigungsteil 1 als Gußteil gefertigt. In die Oberseite 25 des Befestigungsteiles 1 ist die Ausnehmung 26 eingebracht. Die Ausnehmung 26 ist in voller Breite in Richtung des Endes 61 des Befestigungsteiles 1 geöffnet, wobei das Ende 61 dem Gelenkteil 2 bzw. der Wischstange 4 gegenüberliegt. Durch diese seitliche Öffnung der Ausnehmung 26 wird ein Einschubbereich 62 für die Befestigungsmutter 9 gebildet. In die Wand der Ausnehmung 26 ist eine Nut 63 eingearbeitet, welche den Bund 12 der Befestigungsmutter 9 teilweise aufnehmen kann, und die den Bund 12 mit ihrer Oberseite teilweise übergreift. Die Befestigungsmutter 9 ist seitlich durch den Einschubbereich 62 in die Ausnehmung 26 bis zumindest nahezu in Montageposition eingeschoben. Der Bund 12 der Befestigungsmutter 9 befindet sich dabei teilweise in der Nut 63, wobei der obere Rand der Nut 63 den Bund 12 übergreift und damit als Anschlag 10 wirkt. Um die Befestigungsmutter 9 am Herausrutschen aus der Ausnehmung 26 zu hindern, ist der Einschubbereich 62 nach dem Einschieben der Befestigungsmutter 9 durch ein Sicherungselement 64 blockiert. Das Sicherungselement 64 ist ein Kunststofformteil, das mit einem Rastfortsatz 65 in einen im Einschubbereich 62 angeordneten Durchbruch 66 mit Hinterschnitt eingerastet ist. Wie aus Figur 21 ersichtlich ist, kann an einem Sicherungselement 64 eine Abdeckkappe 67 schwenkbar angelenkt sein. Damit ist das Sicherungselement 64 Bestandteil der Abdeckkappe 67. Vorteilhafterweise wird der Wischarm mit geöffneter Abdeckkappe 67 angeliefert, was in der Figur 21 der gestrichelt dargestellten Position der Abdeckkappe 67 entspricht. Erst nach der Montage des Wischarmes auf der Antriebswelle 8 wird die Abdeckkappe 67 über die Ausnehmung 26 des Befestigungsteiles 1 geschwenkt und mittels allgemein bekannter, hier nicht dargestellter Rastmittel in der geschlossenen Position (durchgezogene Linien) gehalten. An der Unterseite 34 des Befestigungsteiles 1 ist der hohlzylindrische Fortsatz 35 zu erkennen, der eine Zentrierung des Befestigungsteiles 1 auf der Antriebswelle 8 und damit eine exakte Ausrichtung des Wischarmes in Bezug auf die zu reinigende Scheibe bewirkt.

In Figur 21a ist gegenüber dem Einschubbereich 62 ein Bereich 68 der Nut 63 gestrichelt dargestellt. Damit soll ausgedrückt werden, daß in diesem Bereich 68 wahlweise auch auf die Nut 63 verzichtet werden kann. Die verbleibenden Bereiche der Nut 63 sind in der Lage, in ausreichendem Maße als Anschlag 10 zu wirken und damit die Abziehfunktion der Befestigungsmutter 9 zu gewährleisten. Als Sicherungselement 64 ist ein einfaches Kunststofformteil in einen Durchbruch 66 eingeklipst, auf eine Abdeckkappe 67 wurde hier verzichtet.

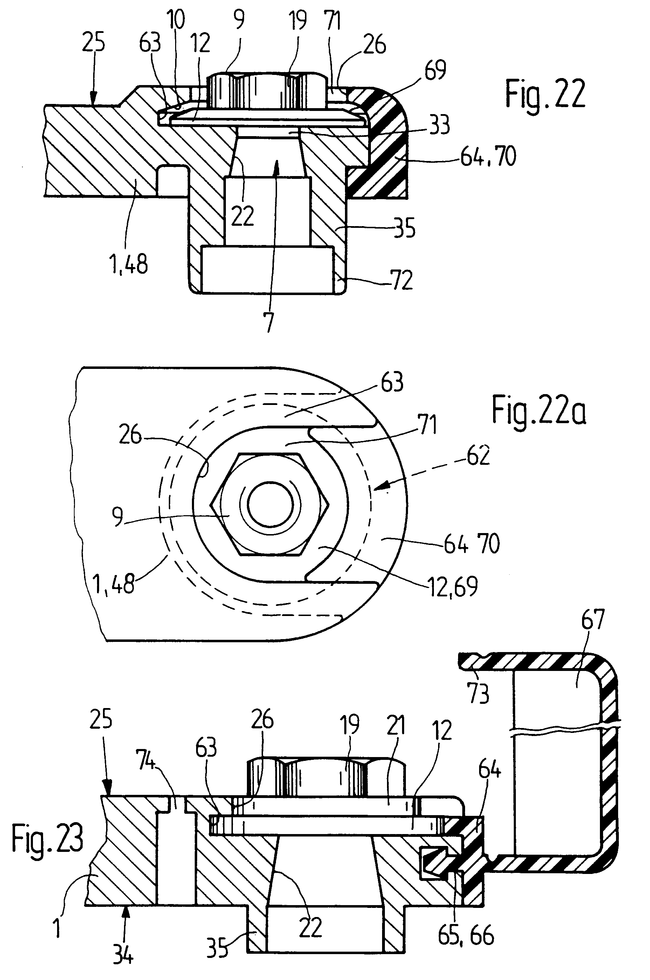

In den Figuren 22 und 22a ist ein ähnliches Ausführungsbeispiel abgebildet wie in den Figuren 21 und 21a. Der hier abgebildete Abschnitt eines Befestigungsteiles 1 gehört zu einem insgesamt als Gußteil hergestellten Befestigungsteil 1 oder ist eine Gußteileinlage 48, welche mit einem bereits beschriebenen Blechteil 47 verbunden wird. Wie bei Figur 21 ist auch hier die Befestigungsmutter 9 seitlich durch einen Einschubbereich 62 in die Ausnehmung 26 eingeschoben, wobei sich ein Teil des Bundes 12 der Befestigungsmutter 9 in der Nut 63 befindet, welche in die Wand der Ausnehmung 26 eingearbeitet ist. Da der Bund 12 der Befestigungsmutter 9 im vorliegenden Ausführungsbeispiel an seiner Oberseite mit einer flachen Fase 69 ausgestattet ist, besitzt auch die Nut 63 eine korrespondierende Form. Als Sicherungselement 64 verschließt ein speziell ausgebildetes Formteil 70 aus Kunststoff den Einschubbereich 62. Dieses Formteil 70, welches den Einschubbereich 62 vollkommen ausfüllt, ist in Einschubrichtung der Befestigungsmutter 9 auf das Befestigungsteil 1 aufgerastet. Es ist so geformt, daß es die Außenkontur des Befestigungsteiles 1 harmonisch zu einem Ganzen ergänzt. Das Angriffsteil 19 der Befestigungsmutter 9 ist im wesentlichen in der Ausnehmung 26 angeordnet, wobei ein kleiner Teil des Angriffteiles 19 die Oberseite 25 des Befestigungsteiles 1 überragt. Zwischen dem Angriffsteil 19 der Befestigungsmutter 9 und der Wand der Ausnehmung 26 bzw. dem Formteil 70 besteht ein umlaufender Spalt 71, der so breit ist, daß ein Mutternschlüssel in Form eines Steckschlüssels ordnungsgemäß am Angriffsteil 19 der Befestigungsmutter 9 angesetzt werden kann. Die Öffnung 7 ist am verjüngten Teil des Innenkonus 22 mit dem kurzen Bohrungsabschnitt 33 zur Zentrierung ausgestattet. An die erweiterte Seite des Innenkonus 22 schließt sich der hohlzylindrische Fortsatz 35 an, der sich mit seiner Innenfläche auf der Antriebswelle 8 abstützen kann und somit das Befestigungsteil 1 zentriert. An diesen hohlzylindrischen Fortsatz 35 schließt sich in axialer Richtung ein zweiter hohlzylindrischer Fortsatz 72 an, dessen Innendurchmesser größer ist als der Innendurchmesser des ersten hohlzylindrischen Fortsatzes 35.
Der zweite hohlzylindrische Fortsatz 72 ist so ausgebildet, daß er in der Lage ist, Lagerteile der Antriebswelle 8, welche aus der Fahrzeugkarosserie herausstehen, zu überdecken. Damit wird ein ästhetischer Sichtschutz geschafften, der auch eine gewisse Schutzfunktion für die von ihm überdeckten Teile vor Umwelteinflüssen ausüben kann. Als Anschlag 10 für die Gewährleistung der Abziehfunktion der Befestigungsmutter 9 wirkt wiederum die Oberseite der Nut 63, welche in die Wand der Ausnehmung 26 eingebracht ist.

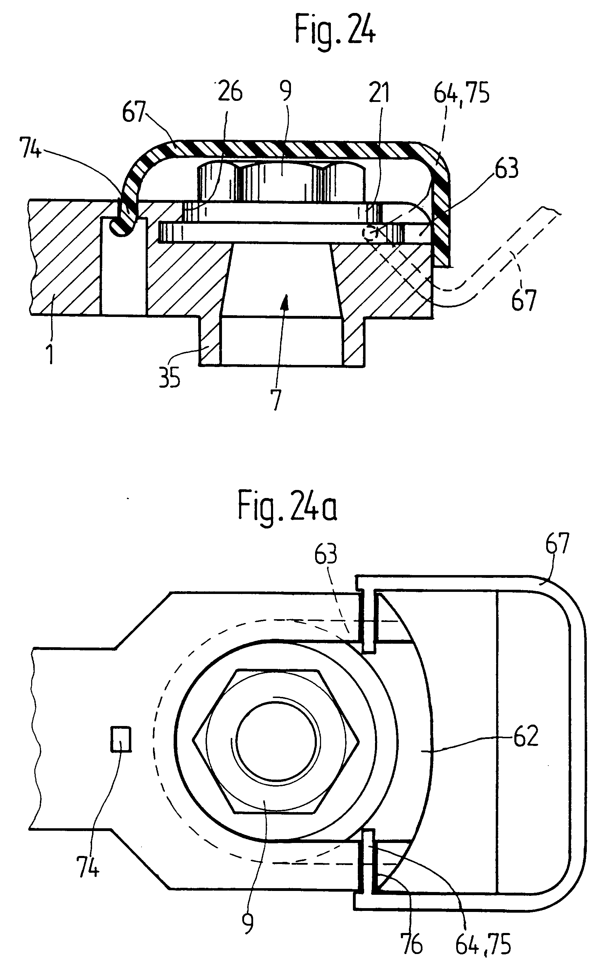

Das Ausführungsbeispiel der Figur 23 ähnelt dem aus Figur 21. Die Befestigungsmutter 9 ist seitlich in die Ausnehmung 26 eingeschoben, wobei sich der Bund 12 der Befestigungsmutter 9 wieder in der Nut 63 befindet und von deren Oberseite, die als Anschlag 10 wirkt, übergriffen wird. Der Einschubbereich 62 wird von einem speziell geformten Sicherungselement 64 blockiert. Das Sicherungselement 64 ist mit einem Rastfortsatz 65, der einen Durchbruch 66 mit Hinterschnitt in der Seitenwand des Befestigungsteiles 1 durchgreift, am Befestigungsteil 1 arretiert. Das Sicherungselement 64 ist dabei so geformt, daß es mit einem Teil in den Einschubbereich 62 hineinragt und dabei nahezu am äußeren Rand des Bundes 12 der Befestigungsmutter 9 anliegt. Wie in Figur 21 ist auch hier eine Abdeckkappe 67 schwenkbar mit dem Sicherungselement 64 verbunden. Nach der Montage des Wischarmes auf der Antriebswelle 8 wird die Abdeckkappe 67 über die Ausnehmung 26 mit Befestigungsmutter 9 geschwenkt und mit der Rastnase 73 in dem Durchbruch 74 mit Hinterschnitt in der Oberseite 25 des Befestigungsteiles 1 verrastet. Die Befestigungsmutter 9 besitzt einen zylindrischen Schaft 21, der geringfügig aus der Ausnehmung 26 herausragt. Das Angriffsteil 19 der Befestigungsmutter 9 ist frei zugänglich für einen Mutternschlüssel. Der Spalt zwischen dem zylindrischen Schaft 21 der Befestigungsmutter 9 und der Wand der Ausnehmung 26 kann gering gehalten werden. An der Unterseite 34 des Befestigungsteiles 1 ist wiederum der hohlzylindrische Fortsatz 35 zur Zentrierung und Abstützung auf der Wischerwelle 8 vorgesehen.

Das in den Figuren 24 und 24 a dargestellte Ausführungsbeispiel entspricht im wesentlichen dem aus Figur 23, wobei die Figur 24a eine Draufsicht auf die Ausführung von Figur 24 darstellt. Der einzige Unterschied zu Figur 23 besteht in der Ausbildung des Sicherungselementes 64. Als Sicherungselement 64 dienen zwei Gelenkzapfen 75, die einstückig an die Abdeckkappe 67 angeformt sind. Die Gelenkzapfen 75 sind axial zueinander ausgerichtet und verlaufen aufeinander zu. In das Befestigungsteil 1 sind für die Gelenkzapfen 75 zwei fluchtende Bohrungen 76 eingebracht, die im Einschubbereich 62 in die Nut 63 einmünden. Die Gelenkzapfen 75 durchgreifen von außen die Bohrungen 76 und ragen soweit in die Nut 63 bzw. den Einschub 62 hinein, daß sie die Befestigungsmutter 9 am Herausrutschen hindern und in Montageposition halten. Mit gestrichelten Linien ist in Figur 24 die geschlossene Position der Abdeckkappe 67 gezeichnet, wobei die Rastnase 73 der Abdeckkappe 67 in dem Durchbruch 74 verrastet ist.

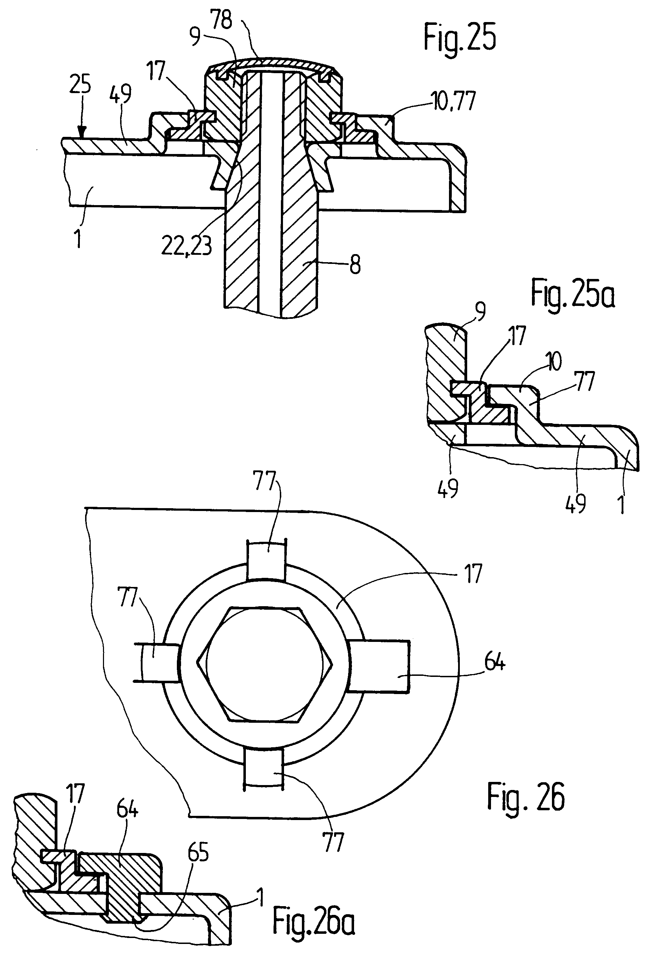

Das Ausführungsbeispiel gemäß der Figuren 25 und 25a bezieht sich auf einen erfindungsgemäßen Wischarm mit einem als Blechteil gefertigten, im Querschnitt im wesentlichen u-förmigen, Befestigungsteil 1. Es kommt eine Befestigungsmutter 9 gemäß Figur 1d zur Anwendung, wobei die Befestigungsmutter 9 auf der Oberseite 25 des Rückenteiles 49 in koaxialer Ausrichtung zu dem Innenkonus 22 angeordnet ist. Die anstelle des Bundes an der Befestigungsmutter 9 befestigte Lochscheibe 17 ist tellerartig profiliert, wobei ihr unterer Rand lose auf der Oberseite 25 des Rückenteiles 49 aufliegt. An vier über den Umfang verteilten Stellen sind lappenartige Befestigungsabschnitte 77 neben der Lochscheibe 17 der Befestigungsmutter 9 nach oben aus dem Rückenteil 49 herausgebogen. Nach dem Aufsetzen der Befestigungsmutter 9 auf den Rückenteil 49 sind die freien Enden der Befestigungsabschnitte 77 radial einwärts gebogen und übergreifen den Rand der Lochscheibe 17. Diese Befestigungsabschnitte 77 halten die Befestigungsmutter 9 am Befestigungsteil 1 und wirken gleichzeitig als Anschlag 10 für die Befestigungsmutter 9, um deren Abziehfunktion zu gewährleisten. Bei dieser Ausführung ist entweder die Befestigungsmutter 9 relativ zur Lochscheibe 17 drehbar oder die Lochscheibe 17 ist drehfest an der Befestigungsmutter 9 befestigt und ist drehbar in Bezug auf die Befestigungsabschnitte 77. Falls bei dieser Ausführung eine Lackbeschichtung des Wischarmes erfolgen soll, ist es sinnvoll, diese nach der Montage der Befestigungsmutter 9 an dem Befestigungsteil 1 durchzuführen, da ansonsten Beschädigungen der Lackschicht beim Umbiegen der Befestigungsabschnitte 77 zu erwarten sind. Um dabei das Innengewinde der Befestigungsmutter 9 vor eindringendem Lack zu schützen, kann die offene Stirnseite der Befestigungsmutter 9 vorübergehend durch eine Abdeckkappe 78 verschlossen werden, die entweder nach der Lackierung oder zu einem späteren Zeitpunkt wieder von der Befestigungsmutter 9 entfernt werden kann. In Figur 25 ist außerdem angedeutet, daß der erfindungsgemäße Wischarm auch auf einer als Hohlwelle ausgebildeten Antriebswelle 8 zu montieren ist. Eine derartige Antriebswelle 8 kann dann in bekannter Weise zur Hindurchführung einer Waschflüssigkeitsleitung verwendet werden oder kann selbst als Teil einer Waschflüssigkeitsleitung ausgestaltet sein.

Figur 25a zeigt einen vergrößerten Ausschnitt aus der Figur 25. Hier ist deutlich sichtbar, daß die Lochscheibe 17 nach unten abgekröpft ist, und von einem aus dem Rückenteil 49 des Befestigungsteiles 1 zunächst nach oben und dann radial einwärts über den abgekröpften Teil der Lochscheibe 17 gebogenen Befestigungsabschnitt 77 übergriffen wird. Dazu ist der vorgesehene Befestigungsabschnitt 77 zunächst an drei Seiten von dem übrigen Rückenteil 49 abgetrennt und dann in der beschriebenen Art und Weise aus dem Rückenteil 49 herausgebogen worden. Das über die Lochscheibe 17 herumgebogene Ende des Befestigungsabschnittes 77 wirkt als Anschlag 10, der die Abziehfunktion der Befestigungsmutter 9 gewährleistet.

Figur 26 zeigt in Draufsicht nahezu das gleiche Ausführungsbeispiel wie in Figur 25. Im Unterschied zu Figur 25 ist in Figur 26 der rechtsliegende Befestigungsabschnitt weggelassen worden. Die drei übrigen Befestigungsabschnitte 77 sind bereits vor der Montage der Befestigungsmutter 9 in die entsprechende Form gebogen worden. Wegen des nichtvorhandenen rechten Befestigungsabschnittes kann von dieser Seite die Befestigungsmutter 9 seitlich mit ihrer Lochscheibe 17 bis unter die drei verbliebenen Befestigungsabschnitte 77 bis in Montageposition eingeschoben werden. Nach dem Einschieben der Befestigungsmutter 9 wird der Einschubbereich 62 durch ein Sicherungselement 64 blockiert. Aus dem in Figur 26 in vergrößerter Schnittdarstellung gezeichneten Ausschnitt von Figur 26 ist deutlich das Sicherungselement 64 erkennbar. Das Sicherungselement 64 ist wiederum ein spezielles Formteil, welches neben dem Rand der Lochscheibe 17 am Rückenteil 49 des Befestigungsteiles 1 angeordnet ist. Die Befestigung des Sicherungselementes 64 erfolgt wiederum durch Verrasten eines einstückig angeformten Rastfortsatzes 65 in einem Durchbruch des Rückenteiles 49. In diesem Fall kann eine Lackierung des Wischarmes vor der Montage der Befestigungsmutter 9 am Befestigungsteil 1 erfolgen, da keine nachträglichen Verformungen von Befestigungsabschnitten oder dergleichen erforderlich sind.

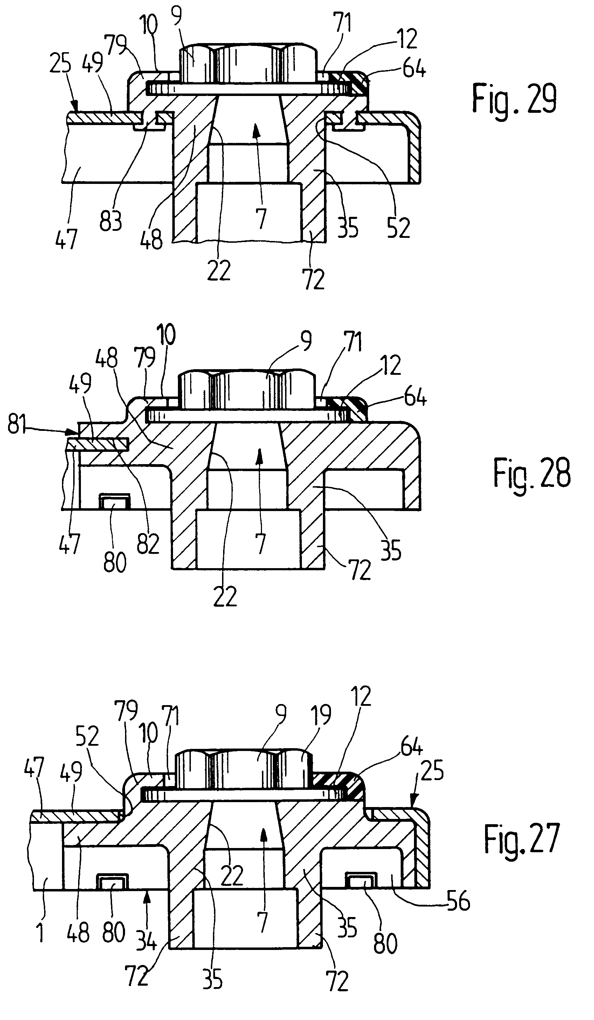

In Figur 27 ist ein Ausführungsbeispiel dargestellt, bei welchem das Befestigungsteil 1 aus einem Blechteil 47 mit Gußteileinlage 48 besteht. Das Blechteil 47 besitzt im Querschnitt im wesentlichen eine u-förmige Gestalt, und in den Rückenteil 49 ist ein relativ großer Durchbruch 52 eingebracht. Die Gußteileinlage 48 beinhaltet die als Innenkonus 22 ausgebildete Öffnung 7 für die Befestigung des Wischarmes auf einer Antriebswelle 8. An der Unterseite 34 schließt sich in axialer Richtung an die erweiterte Seite des Innenkonus 22 zunächst ein erster hohlzylindrischer Fortsatz 35 und an diesen ein zweiter hohlzylindrischer Fortsatz 72 an. Die Bedeutung und Funktion dieser beiden Fortsätze 35 und 72 ist bei vorhergehenden Ausführungsbeispielen bereits hinreichend erläutert worden. An die Oberseite der Gußteileinlage 48 ist ein Kragen 79 angeformt. Dieser Kragen 79 ist so gestaltet, daß er zumindest nach einer Seite derart geöffnet ist, daß die Befestigungsmutter 9 mit ihrem Bund 12 seitlich unter den Kragen 79 eingeschoben werden kann, bis sich die Befestigungsmutter 9 in Montageposition befindet. Die so gestaltete Gußteileinlage 48 ist von unten formschlüssig in das Blechteil 47 eingesetzt, wobei der obere Teil der Gußteileinlage 48 mit dem angeformten Kragen 79 nach oben aus der Ausnehmung 52 herausragt. Die Gußteileinlage 48 wird durch Befestigungslappen 80 am Blechteil 47 gehalten. Dazu sind die Befestigungslappen 80, die an den unteren Rand der Seitenwände 56 des Blechteiles 47 angeformt sind, um den unteren Rand der Gußteileinlage 48 herumgebogen und greifen dort in entsprechende Ausnehmungen in der Gußteileinlage 48 ein. Das Oberteil der Gußteileinlage 48 überragt die Oberseite 25 des Blechteiles 47 zumindest um einen solchen Betrag, daß die Befestigungsmutter 9 seitlich mit dem Bund 12 unter den Kragen 79 eingeschoben werden kann. Nach dem Einschieben der Befestigungsmutter 9 wird der Einschubbereich durch ein Sicherungselement 64 blockiert. Das Sicherungselement 64 ist derart als Formteil ausgebildet, daß es die seitliche Einschuböffnung des Kragens 79 vollständig verschließt und die äußere Kontur des Oberteiles der Gußteileinlage zu einem vollständigen Ganzen ergänzt. Der Angriffsteil 19 der Befestigungsmutter 9 ragt zumindest teilweise nach oben aus dem Kragen 79 heraus. Zwischen dem Angriffsteil 19 der Befestigungsmutter 9 und dem Kragen 79 bzw. dem Sicherungselement 64 besteht ein ausreichend breiter umlaufender Spalt 71, der den Zugriff eines Mutternschlüssels in Form eines Steckschlüssels gewährleistet. Der einwärts gerichtete Rand des Kragens 79 wirkt als Anschlag 10 für den Bund 12 der Befestigungsmutter 9 und sichert somit die Funktion der Befestigungsmutter.9

Das in Figur 28 dargestellt Ausführungsbeispiel unterscheidet sich nur wenig von dem Ausführungsbeispiel gemäß Figur 27. Grundsätzlich ist die Gußteileinlage 48 gleich aufgebaut und mit gleichen Funktionen behaftet. Für die Befestigung der Gußteileinlage 48 am Blechteil 47 ist in eine Stirnseite der Gußteileinlage 48 eine schlitzförmige Nut 82 eingebracht. Mit dieser Nut 82 ist die Gußteileinlage 48 auf das Blechteil 47, insbesondere auf deren Rückenteil 49, aufgesteckt und mittels umgebogener Befestigungslappen 80 des Blechteiles 47 an dem Blechteil 47 gehalten.

Bei der in Figur 29 dargestellten Ausführung weist die Gußteileinlage 48 wieder grundsätzlich den gleiche Aufbau auf wie bei den Figuren 27 und 28. Unterschiedlich ist wiederum die Befestigung der Gußteileinlage 48 am Blechteil 47. Die Gußteileinlage 48 ist hier von oben so in den Rückenteil 49 eingesetzt, daß die an der Unterseite der Gußteileinlage 48 angeformten Nietzapfen 83 entsprechende Durchbrüche im Rückenteil 49 des Blechteiles 47 durchgreifen und an der Unterseite des Rückenteiles 49 vernietet sind. Mit seinem Unterteil, in welchem der größte Teil der Öffnung 7, und die hohlzylindrichen Fortsätze 35 und 72 enthalten sind, durchgreift die Gußteileinlage 48 den Durchbruch 52 im Rückenteil 49 des Blechteiles.

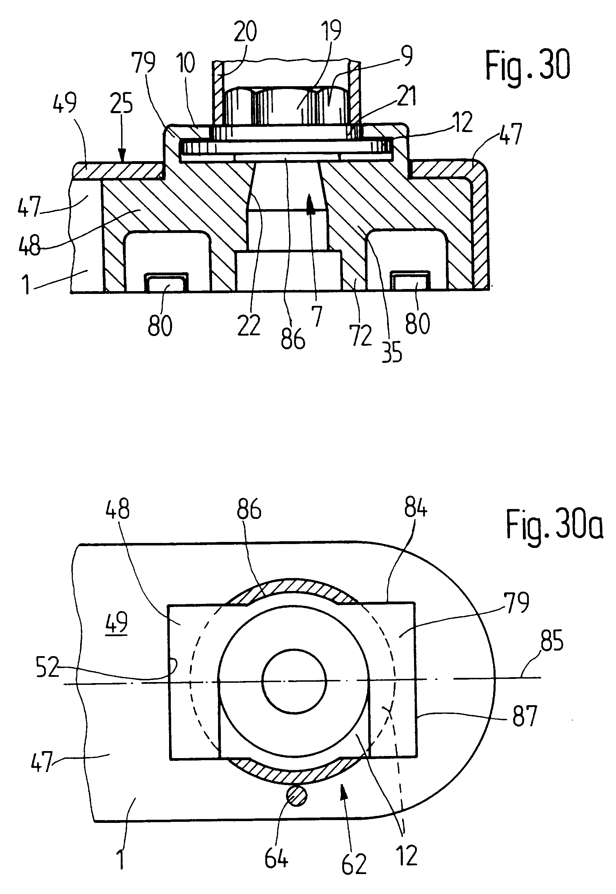

Im Ausführungsbeispiel gemäß der Figuren 30 und 30a, wobei die Figur 30a eine Draufsicht zu Figur 30 darstellt, wird das Befestigungsteil 1 wiederum von einem Blechteil 47 mit Gußteileinlage 48 gebildet. Der in den Rückenteil 49 des Blechteiles 47 eingebrachte Durchbruch 52 besitzt eine im wesentlichen rechteckige Form, wobei die Längsseiten 84 parallel zur Längsachse 85 des Befestigungsteiles 1 ausgerichtet sind. In ihrem mittleren Bereich sind die Längsseiten 84 des Durchbruches 52 kreisbogenförmig nach außen geformt, wobei der Durchmesser dieser kreisbogenförmigen Abschnitte der Längsseiten 84 etwas kleiner ist als der

Durchmesser des Bundes 12 der Befestigungsmutter 9. Außerdem ist der Kragen 79 , wie aus Figur 30a ersichtlich, auf der dem Einschubbereich 62 gegenüberliegenden Seite zumindest an seiner Unterseite derart radial geöffnet, daß der Bund 12 der Befestigungsmutter 9 an dieser Seite aus dem Kragen 79 hervorragt, wobei allerdings der den Bund übergreifende Teil des Kragens 79 in diesem Bereich erhalten bleibt. Dadurch wird erreicht, daß die Befestigungsmutter 9 später nicht nur auf die Gußteileinlage 48 sondern in den in Figur 30a schraffierten Kreisringsegmenten 86 auch auf die Oberseite 25 des Blechteiles 47 drückt. Die Gußteileinlage 48 ist von unten in das Blechteil 47 eingesetzt. Dazu besitzt der obere Teil der Gußteileinlage 48, zu welchem auch der angeformte Kragen 79 gehört, eine mit dem Durchbruch 52 korrespondierende Form. Die formschlüssige Verbindung der Gußteileinlage 48 an dem Blechteil 47 wird wiederum durch umgebogene Befestigungslappen 80 des Blechteiles 47 vervollständigt. Im Unterschied zu den Ausführungsbeispielen gemäß der Figuren 27 bis 29 ist hier der Kragen 79 quer zur Mittellängsachse 85 des Befestigungsteiles 1 geöffnet. Von dieser Seite her ist die Befestigungsmutter 9 mit ihrem Bund 12 unter den Kragen 79 bis in Montageposition eingeschoben. Der Einschubbereich 62 wird wie aus Figur 30a ersichtlich wiederum durch ein Sicherungselement 64 blockiert. In Figur 30a ist wegen der besseren Übersichtlichkeit nicht die gesamte Befestigungsmutter 9 gezeichnet, sondern nur der Bund 12 angedeutet. Die Form bzw. Art der Befestigungsmutter 9 ist deutlich aus Figur 30 ersichtlich. Es kam wiederum ein Befestigungsmutter 9 gemäß Figur 1e zur Anwendung. Der Bund 12 der Befestigungsmutter 9 wird von dem Kragen 79 übergriffen, so daß dieser als Anschlag 10 wirkt und die Abziehfunktion der Befestigungsmutter 9 gewährleistet. Um Beschädigungen des Befestigungsteiles 1 im Bereich des Kragen 79 durch einen am Angriffsteil 19 der Befestigungsmutter 9 angreifenden Mutternschlüssel 20 zu vermeiden und um gleichzeitig den Spalt zwischen der Befestigungsmutter 9 und dem Kragen 79 so gering wie möglich halten zu können, ist der zylindrische Schaft 21 der Befestigungsmutter 9 im wesentlichen innerhalb des Kragens 79 angeordnet und ragt nur geringfügig aus diesem heraus. Für eine noch sicherere formschlüssige Verbindung zwischen Blechteil 47 und Gußteileinlage 48 können die Schmalseiten 87 des Durchbruches 52 sowie die korrespondierenden Schmalseiten des Oberteiles der Gußteileinlage 48 mit einer in den Figuren 30 und 30a nicht dargestellten Verzahnung ausgestattet sein.

### Bezugszeichen

- 1 -: Befestigungsteil
- 2 -: Gelenkteil
- 3 -: Achse
- 4 -: Wischstange
- 5 -: Anpreßdruckfeder
- 6 -: C-Bügel
- 7 -: Öffnung
- 8 -: Antriebswelle
- 9 -: Befestigungsmutter
- 10 -: Anschlag
- 11 -: Abdeckkappe
- 12 -: Bund
- 13 -: Befestigungsschraube
- 14 -: Schraubenkopf
- 15 -: Unterlegscheibe
- 16 -: Fortsatz
- 17 -: Lochscheibe
- 18 -: Fortsatz
- 19 -: Angriffsteil
- 20 -: Mutternschlüssel
- 21 -: zylindrischer Schaft
- 22 -: Innenkonus
- 23 -: Außenkonus
- 24 -: Gewindeansatz
- 25 -: Oberseite (des Befestigungsteiles)
- 26 -: Ausnehmung
- 27 -: Stift
- 28 -: (fluchtende) Bohrung
- 29 -: Längsachse (des Befestigungsteiles)
- 30 -: Verbindungssteg
- 31 -: Bohrungsabschnitt
- 32 -: Mutterngewinde
- 33 -: Bohrungsabschnitt
- 34 -: Unterseite
- 35 -: (hohlzylindrischer) Fortsatz
- 36 -: Klemmbrille
- 37 -: Lochscheibe
- 38 -: Absatz
- 39 -: Materialverformung
- 40 -: Sicherungsscheibe
- 41 -: Vorsprung
- 42 -: Rücksprung
- 43 -: (unterer) Teil
- 44 -: Stufe
- 45 -: Federring
- 46 -: (zylindrischer) Bereich
- 47 -: Blechteil
- 48 -: Gußteileinlage
- 49 -: Rückenteil
- 50 -: Befestigungslappen
- 51 -: Ausnehmung
- 52 -: Durchbruch (im, Rückenteil)
- 53 -: Lochscheibe
- 54 -: Befestigungsabschnitt
- 55 -: Ende (des Befestigungsabschnittes)
- 56 -: Seitenwand
- 57 -: Vorsprung
- 58 -: Kanal
- 59 -: Vorsprung
- 60 -: Durchbruch
- 61 -: Ende
- 62 -: Einschubbereich
- 63 -: Nut
- 64 -: Sicherungselement
- 65 -: Rastfortsatz
- 66 -: Durchbruch (mit Hinterschnitt)
- 67 -: Abdeckkappe
- 68 -: Bereich
- 69 -: Fase
- 70 -: Formteil
- 71 -: (umlaufender) Spalt
- 72 -: (hohlzylindrischer) Fortsatz
- 73 -: Rastnase
- 74 -: Durchbruch (mit Hinterschnitt)
- 75 -: Gelenkzapfen
- 76 -: (fluchtende) Bohrung
- 77 -: Befestigungsabschnitt
- 78 -: Abdeckkappe
- 79 -: Kragen
- 80 -: Befestigungslappen
- 81 -: Stirnseite
- 82 -: (schlitzförmige) Nut
- 83 -: Nietzapfen
- 84 -: Längsseite
- 85 -: Längsachse
- 86 -: Kreisringsegment
- 87 -: Schmalseite
- H -: Höhe
- d1 -: Durchmesser
- d2 -: Durchmesser
- d3 -: Durchmesser

## Patentansprüche

1. Wischarm für eine Scheibenwischeranlage, insbesondere für Kraftfahrzeuge, der drehfest an einer Antriebswelle (8) zu befestigen ist, wobei der Wischarm mit einer Öffnung (7) in seinem Befestigungsteil (1), die vorzugsweise als Innenkonus (22) ausgebildet ist, auf das Ende einer Antriebswelle (8), das vorzugsweise als korrespondierender Außenkonus (23) ausgebildet ist, aufsteckbar bzw. aufpreßbar und mittels einer Befestigungsmutter (9) an der Antriebswelle (8) zu fixieren ist, wobei die Befestigungsmutter (9) zumindest annähernd in Montageposition derartig unverlierbar an dem Befestigungsteil (1) des Wischarmes gehalten ist, daß mit der Befestigungsmutter (9) der Wischarm von der Antriebswelle (8) abziehbar ist, und die Befestigungsmutter (9) an der am Befestigungsteil (1) zugewandten Seite einen sich radial erstreckenden Bund (12) besitzt, den ein oder mehrere mit dem Befestigungsteil (1) verbundene Anschläge übergreifen, wobei das Befestigungsteil (1) des Wischarmes an der Oberseite (25) eine Ausnehmung (26) besitzt, in deren Boden die Öffnung (7) für die Befestigung des Wischarmes auf der Antriebswelle (8) einmündet, und die Befestigungsmutter (9) innerhalb der Ausnehmung (26) angeordnet ist und ein oder mehrere Anschläge an dem Befestigungsteil (10) vorgesehen sind, die über dem Bund (12) der Befestigungsmutter (9) angeordnet sind, **dadurch gekennzeichnet**, daß die Ausnehmung (26) an der Oberseite (25) des Befestigungsteiles (1) eine am Umfang geschlossene Ausnehmung (26) ist und der oder die über dem Bund (12) der Befestigungsmutter (9) angeordneten Anschläge (10) separat an dem Befestigungsteil (1) montierte Anschläge (10) sind.

2. Wischarm nach Anspruch 1, **dadurch gekennzeichnet**, daß die Anschläge (10) zwei Stifte (27) sind, die in fluchtenden Bohrungen (28) oberhalb des Bundes (12) an gegenüberliegenden Seiten der Befestigungsmutter (9) in der die Ausnehmung (26) umgebenden Wand angeordnet sind.

3. Wischarm nach Anspruch 2, **dadurch gekennzeichnet**, daß die Stifte (27) einen runden oder rechteckigen oder anders profilierten Querschnitt besitzen.

4. Wischarm nach einem der vorhergehenden Ansprüche, **dadurch gekennzeichnet**, daß die Anschläge (10) nach der Montage des Wischarmes auf der Antriebswelle (8) von dem Befestigungsteil (1) entfernbar und vor der Demontage des Wischarmes von der Wischerwelle (8) wieder am Befestigungsteil (1) anbringbar sind.

5. Wischarm nach Anspruch 4, **dadurch gekennzeichnet**, daß die Anschläge (10) zwei parallel voneinander beabstandete Stifte (27) sind, die an einem Ende gabelförmig miteinander verbunden sind und die in fluchtende Bohrungen (28) oberhalb des Bundes (12) der Befestigungsmutter (9) in der die Ausnehmung (26) umgebenden Wand einbringbar bzw. aus diesen entfernbar sind.

6. Wischarm nach Anspruch 1, **dadurch gekennzeichnet**, daß die Ausnehmung (26) im Befestigungsteil (1) an ihrem bodenseitigen Rand radial neben dem Bund (12) der Befestigungsmutter (9) einen Absatz (38) besitzt, der zumindest geringfügig höher ist als der Bund (12) der Befestigungsmutter (9), daß als Anschlag (10) eine Lochscheibe (37) den Bund (12) der Befestigungsmutter (9) radial übergreifend auf dem Absatz (38) angeordnet und an dem Befestigungsteil (1) befestigt ist.

7. Wischarm nach Anspruch 1, **dadurch gekennzeichnet**, daß als Anschlag (10) eine Lochscheibe (37) lose auf dem Bund (12) der Befestigungsmutter (9) aufliegt und daß eine Sicherungsscheibe (40) die Lochscheibe (37) radial übergreifend über dieser Lochscheibe (37) angeordnet und an der Wand der Ausnehmung (26) gehalten ist.

8. Wischarm nach Anspruch 1, **dadurch gekennzeichnet**, daß als Anschlag (10) eine Klemmbrille (36) mit ihrem inneren Rand über dem Bund (12) der Befestigungsmutter (9) angeordnet und mit ihrem äußeren Rand durch Verspannen an der Wand der Ausnehmung (26) festgelegt ist.

9. Wischarm nach Anspruch 1, **dadurch gekennzeichnet**, daß als Anschlag (10) ein radial aufgeschnittener Federring (45) radial beweglich und axial abgestützt in der Wand der Ausnehmung (26) angeordnet ist, daß der Bund (12) der Befestigungsmutter (9) stufenartig abgesetzt ist, wobei der Durchmesser (d2) der Stufe (44) geringfügig kleiner ist als der Innendurchmesser (d3) des Federringes (35), daß der dem Befestigungsteil (1) zugewandte untere Teil (43) des Bundes (12) unter vorübergehender Aufweitung des Federringes (35) axial durch diesen hindurchgepreßt werden kann, und daß der Federring (35) auf der Stufe (44) seine ursprüngliche Form und Größe wieder eingenommen hat, und den unteren Teil (43) des Bundes (12) übergreift.

10. Wischarm für eine Scheibenwischeranlage, insbesondere für Kraftfahrzeuge, der drehfest an einer Antriebswelle (8) zu befestigen ist, wobei der Wischarm mit einer Öffnung (7) in seinem Befestigungsteil (1), die vorzugsweise als Innenkonus (22) ausgebildet ist, auf das Ende einer Antriebswelle (8), das vorzugsweise als korrespondierender Außenkonus (23) ausgebildet ist, aufsteckbar bzw. aufpreßbar und mittels einer Befestigungsmutter (9) an der Antriebswelle (8) zu fixieren ist, wobei die Befestigungsmutter (9) zumindest annähernd in Montageposition derartig unverlierbar an dem Befestigungsteil (1) des Wischarmes gehalten ist, daß mit der Befestigungsmutter (9) der Wischarm von der Antriebswelle (8) abziehbar ist, und die Befestigungsmutter (9) an der am Befestigungsteil (1) zugewandten Seite einen sich radial erstreckenden Bund (12) besitzt, den ein oder mehrere mit dem Befestigungsteil (1) verbundene Anschläge übergreifen, und das Befestigungsteil (1) des Wischarmes an der Oberseite (25) eine Ausnehmung (26) besitzt, in deren Boden die Öffnung (7) für die Befestigung des Wischarmes auf der Antriebswelle (8) einmündet, und die Ausnehmung (26) nach einer Seite hin geöffnet ist, wodurch ein Einschubbereich (62) für die Befestigungsmutter (9) gebildet ist, wobei zumindest in die Seitenwände der geöffneten Ausnehmung (26) eine Nut (63) für den Einschub bzw. zur Aufnahme des Bundes (12) der Befestigungsmutter (9) eingebracht und die Befestigungsmutter (9) seitlich durch den Einschubbereich (62) bis in zumindest annähernde Montageposition eingeschoben und der Einschubbereich (62) durch ein Sicherungselement (64) gesichert ist, **dadurch gekennzeichnet**, daß der Einschubbereich (62) durch das separat am Befestigungsteil (1) montierte Sicherungselement (64) blockiert ist.

11. Wischarm für eine Scheibenwischeranlage, insbesondere für Kraftfahrzeuge, der drehfest an einer Antriebswelle (8) zu befestigen ist, wobei der Wischarm mit einer Öffnung (7) in seinem Befestigungsteil (1), die vorzugsweise als Innenkonus (22) ausgebildet ist, auf das Ende einer Antriebswelle (8), das vorzugsweise als korrespondierender Außenkonus (23) ausgebildet ist, aufsteckbar bzw. aufpreßbar und mittels einer Befestigungsmutter (9) an der Antriebswelle (8) zu fixieren ist, wobei die Befestigungsmutter (9) zumindest annähernd in Montageposition derartig unverlierbar an dem Befestigungsteil (1) des Wischarmes gehalten ist, daß mit der Befestigungsmutter (9) der Wischarm von der Antriebswelle (8) abziehbar ist, und die Befestigungsmutter (9) an der am Befestigungsteil (1) zugewandten Seite einen sich radial erstreckenden Bund (12) besitzt, den ein oder mehrere mit dem Befestigungsteil (1) verbundene Anschläge übergreifen, wobei das Befestigungsteil (1) des Wischarmes insgesamt als Gußteil gefertigt ist oder von einer die Öffnung (7) für die Befestigung auf der Antriebswelle (8) beinhaltenden Gußteileinlage (48), welche an einem Blechteil (47) befestigt ist, gebildet wird und an der Oberseite (25) des Befestigungsteiles (1) beziehungsweise der Gußteileinlage (48) ein Kragen (79) angeformt ist, der bezogen auf die geometrische Achse der Öffnung (7) zumindest nach einer Seite radial geöffnet ist, wobei die Befestigungsmutter (9) mit ihrem Bund (12) seitlich unter den Kragen (79) eingeschoben ist, so daß das Oberteil der Befestigungsmutter (9) in axialer Verlängerung zur geometrischen Achse der Öffnung (7) aus dem Kragen (79) hervorsteht, und der Einschubbereich (62) durch ein Sicherungselement (64) gesichert ist, **dadurch gekennzeichnet**, daß der Einschubbereich (62) durch das separat am Befestigungsteil (1) montierte Sicherungselement (64) blockiert ist.

12. Wischarm nach Anspruch 11, **dadurch gekennzeichnet**, daß die Gußteileinlage (48) von unten in ein im Querschnitt im wesentlichen U-förmiges Blechteil (47), vorzugsweise formschlüssig, eingesetzt ist und dabei mit seinem die Befestigungsmutter (9) aufnehmenden Oberteil einen Durchbruch (52) im Rückenteil (49) des Blechteiles (47) durchgreift und durch umgebogene Abschnitte des Blechteiles (47), insbesondere in Form von Befestigungslappen (80), am Blechteil (47) fixiert ist.

13. Wischarm nach Anspruch 12, **dadurch gekennzeichnet**, daß der Kragen (79) zumindest annähernd rechtwinklig zur Längsachse (85) des Befestigungsteiles (1) geöffnet ist, daß der Durchbruch (52) im Rückenteil (49) des Blechteiles (47) und das in dem Durchbruch (52) angeordnete Oberteil der Gußteileinlage (48) eine miteinander korrespondierende, im wesentlichen rechteckige Form besitzen, wobei sich die Längsseiten (84) dieser rechteckigen Form parallel zur Längsachse (85) des Befestigungsteiles (1) erstrecken und daß der Bund (12) der Befestigungsmutter (9) an den Längsseiten (84) der rechteckigen Form die Ausnehmung (52) überragt und in diesen gegenüberliegenden Abschnitten (86) auf das Blechteil (47) einwirkt.

14. Wischarm nach Anspruch 11, **dadurch gekennzeichnet**, daß die Gußteileinlage (48) mit einer stirnseitigen schlitzförmigen Nut (82) auf das Blechteil (47) aufgesteckt ist und mittels umgebogener Abschnitte des Blechteiles (47), insbesondere in Form von Befestigungslappen (80) am Blechteil (47) fixiert ist.

15. Wischarm nach Anspruch 11, **dadurch gekennzeichnet**, daß die Gußteileinlage (48) von oben auf das Blechteil (47) aufgesetzt ist, wobei der untere Teil der Gußteileinalge (48) den Durchbruch (52) im Blechteil (47) durchdringt und die Gußteileinlage (48) mit dem Blechteil (47) vernietet, verstemmt oder verschraubt ist.

16. Wischarm für eine Scheibenwischeranlage, insbesondere für Kraftfahrzeuge, der drehfest an einer Antriebswelle (8) zu befestigen ist, wobei der Wischarm ein Befestigungsteil (1) aufweist, das ein im Querschnitt im wesentlichen U-förmiges Blechteil mit zwei Seitenwänden und einem die Seitenwände miteinander verbindenden Rückenteil (49) ist, und mit einer Öffnung (7) in seinem Befestigungsteil (1), die vorzugsweise als Innenkonus (22) ausgebildet ist, auf das Ende einer Antriebswelle (8), das vorzugsweise als korrespondierender Außenkonus (23) ausgebildet ist, aufsteckbar bzw. aufpreßbar und mittels einer Befestigungsmutter (9) an der Antriebswelle (8) zu fixieren ist, wobei die Befestigungsmutter (9) zumindest annähernd in Montageposition derartig unverlierbar an dem Befestigungsteil (1) des Wischarmes gehalten ist, daß mit der Befestigungsmutter (9) der Wischarm von der Antriebswelle (8) abziehbar ist, und die Befestigungsmutter (9) an der am Befestigungsteil (1) zugewandten Seite einen sich radial erstreckenden Bund (12) besitzt, über dem ein einstückig mit dem Befestigungsteil (1) ausgebildeter Befestigungsabschnitt steht, **dadurch gekennzeichnet**, daß die Befestigungsmutter (9) auf dem Rückenteil (49) des Befestigungsteiles (1) aufliegt und daß mehrere über den Umfang verteilt angeordnete, einstückig mit dem Befestigungsteil (1) ausgebildete Befestigungsabschnitte (77) neben dem Rand des Bundes (12) nach oben von dem Rückenteil (49) abstehen und den Rand des Bundes (12) der Befestigungsmutter (9) als Anschläge übergreifen.

17. Wischarm nach Anspruch 16, **dadurch gekennzeichnet**, daß die Befestigungsabschnitte (77) aus dem Rückenteil (49) außer an einer Seite herausgeschert bzw. herausgestanzt und zunächst nach oben und dann radial einwärts über den Rand des Bundes (12) der Befestigungsmutter (9) gebogen sind.

18. Wischarm nach Anspruch 16 oder 17, **dadurch gekennzeichnet**, daß sich auf einer radialen Seite der Öffnung (7) kein Befestigungsabschnitt (77) befindet, so daß die Befestigungsmutter (9) mit ihrem Bund (12) und gegebenenfalls zusätzlich die Unterlegscheibe (15) bis unter die vorhandenen Befestigungsabschnitte (77) eingeschoben ist, und daß der Einschubbereich (62) durch ein separat am Befestigungsteil montiertes Sicherungselement (64) blockiert ist.

19. Wischarm nach einem der Ansprüche 10 bis 15 oder 18, **dadurch gekennzeichnet**, daß das Sicherungselement (64) ein stopfenartiges Kunststoffteil mit Rastelementen ist, welches in einen Durchbruch (66) im Rückenteil (49) des Befestigungsteiles (1) eingeklipst ist.

20. Wischarm nach einem der Ansprüche 10 bis 15 oder 18, **dadurch gekennzeichnet**, daß das Sicherungselement (64) gelenkig mit einer Abdeckkappe (67) verbunden ist und so am Befestigungsteil (1) befestigt ist, daß die Befestigungsmutter (9) und gegebenenfalls die Unterlegscheibe (15) am Herausrutschen gehindert ist, wobei die Abdeckkappe (67) nach der Montage des Wischarmes auf der Antriebswelle (8) über die Befestigungsmutter (9) schwenkbar und, insbesondere am Befestigungsteil (1), verrastbar ist.

21. Wischarm nach einem der Ansprüche 10 bis 15, **dadurch gekennzeichnet**, daß das Sicherungselement (64) ein Gelenkbolzen ist, mittels welchem eine Abdeckkappe (67) am Befestigungsteil (1) angelenkt ist, wobei der Gelenkbolzen in fluchtenden Bohrungen (76) im Befestigungsteil (1) bzw. im Kragen (79) etwa in Höhe des Bundes (12) und evtl. einer Unterlegscheibe (15) angeordnet ist und den Einschubbereich (62) blockiert.

22. Wischarm nach Anspruch 21, **dadurch gekennzeichnet**, daß anstelle eines durchgehenden Gelenkbolzens zwei Gelenkzapfen (75) an die Abdeckkappe (67) angeformt sind und von außen durch die fluchtenden Bohrungen (76) hindurchragen.

23. Wischarm nach einem der Ansprüche 10 bis 15, **dadurch gekennzeichnet**, daß das Sicherungselement (64) ein Formteil (70), insbesondere aus Kunststoff, ist, welches, insbesondere in Einschubrichtung der Befestigungsmutter (9), auf das Befestigungsteil (1) des Wischarmes aufrastbar ist und welches vorzugsweise die Gestalt des Befestigungsteiles (1) zu einem harmonischen Ganzen vervollständigt.

24. Wischarm für eine Scheibenwischeranlage, insbesondere für Kraftfahrzeuge, der drehfest an einer Antriebswelle (8) zu befestigen ist, wobei der Wischarm mit einer Öffnung (7) in seinem Befestigungsteil (1), die vorzugsweise als Innenkonus (22) ausgebildet ist, auf das Ende einer Antriebswelle (8), das vorzugsweise als korrespondierender Außenkonus (23) ausgebildet ist, aufsteckbar bzw. aufpreßbar und mittels einer Befestigungsmutter (9) an der Antriebswelle (8) zu fixieren ist, wobei die Befestigungsmutter (9) zumindest annähernd in Montageposition derartig unverlierbar an dem Befestigungsteil (1) des Wischarmes gehalten ist, daß mit der Befestigungsmutter (9) der Wischarm von der Antriebswelle (8) abziehbar ist, und die Befestigungsmutter (9) an der am Befestigungsteil (1) zugewandten Seite einen sich radial erstreckenden Bund (12) besitzt, den ein oder mehrere mit dem Befestigungsteil (1) verbundene Anschläge übergreifen, **dadurch gekennzeichnet**, daß die Befestigungsmutter (9) auf der Oberseite (25) des Befestigungsteiles (1) aufliegt, daß eine Lochscheibe (53) den Bund (12) übergreift, wobei das Oberteil der Befestigungsmutter (9) das Loch der Lochscheibe (53) durchgreift, und daß die Lochscheibe (53) von ihr abstehende Befestigungsabschnitte (54) besitzt, mit denen die Lochscheibe (53) an dem Befestigungsteil (1) befestigt ist.

25. Wischarm für eine Scheibenwischeranlage, insbesondere für Kraftfahrzeuge, der drehfest an einer Antriebswelle (8) zu befestigen ist, wobei der Wischarm mit einer Öffnung (7) in seinem Befestigungsteil (1), die vorzugsweise als Innenkonus (22) ausgebildet ist, auf das Ende einer Antriebswelle (8), das vorzugsweise als korrespondierender Außenkonus (23) ausgebildet ist, aufsteckbar bzw. aufpreßbar und mittels einer Befestigungsmutter (9) an der Antriebswelle (8) zu fixieren ist, wobei die Befestigungsmutter (9) zumindest annähernd in Montageposition derartig unverlierbar an dem Befestigungsteil (1) des Wischarmes gehalten ist, daß mit der Befestigungsmutter (9) der Wischarm von der Antriebswelle (8) abziehbar ist, **dadurch gekennzeichnet**, daß die Befestigungsmutter (9) an ihrer auf der Oberseite (25) des Befestigungsteiles (1) aufliegenden Seite einen hohlzylindrischen Fortsatz (18) besitzt, der das Loch einer Lochscheibe (53) durchgreift und dessen Rand an der Unterseite der Lochscheibe (53) umgebördelt ist, wobei die Befestigungsmutter (9) relativ zur Lochscheibe (53) verdrehbar ist, und daß die Lochscheibe (53) von ihr abstehende Befestigungsabschnitte (54) besitzt, mit denen sie an dem Befestigungsteil (1) befestigt ist.

26. Wischarm nach Anspruch 24 oder 25, **dadurch gekennzeichnet**, daß die Lochscheibe (53) an ihrem äußeren Umfang mindestens zwei diametral gegenüberliegende oder mehrere über den Umfang verteilt angeordnete Befestigungsabschnitte (54) besitzt, die sich axial außen entlang einer Seitenwand (56) des Befestigungsteiles (1) erstrecken und mit einem einwärts gebogenen Ende (55) den unteren Rand der Seitenwand (56) oder einen Rücksprung in der Seitenwand (56) untergreifen oder in eine entsprechende Ausnehmung bzw. einen Durchbruch in der Seitenwand (56) des Befestigungsteiles (1) eingreifen.

27. Wischarm nach Anspruch 24 oder 25, **dadurch gekennzeichnet**, daß die Lochscheibe (53) an ihrem äußeren Umfang mindestens zwei diametral gegenüberliegende oder mehrere über den Umfang verteilt angeordnete Befestigungsabschnitte (54) besitzt, die sich axial durch Durchbrüche (60) im Rückenteil (49) des Befestigungsteiles (1) erstrecken und mit einem, vorzugsweise auswärts, umgebogenen Ende (55) die Unterseite des Rückenteiles (49) oder die Seitenwand (56) oder einen Vorsprung (57, 59) der Seitenwand (56) untergreifen oder in eine entsprechende Ausnehmung in der Seitenwand (56) des Befestigungsteiles (1) eingreifen.

28. Wischarm nach einem der Ansprüche 24 bis 27, **dadurch gekennzeichnet**, daß die Befestigungsabschnitte (54) der Lochscheibe (53) derart federnd ausgebildet sind, daß die Lochscheibe (53) auf das Befestigungsteil (1) aufgerastet bzw. mit ihren Befestigungsabschnitten (54) in entsprechende Ausnehmungen oder dergleichen des Befestigungsteiles (1) eingerastet ist.

29. Wischarm nach einem der vorhergehenden Ansprüche, **dadurch gekennzeichnet**, daß zwischen dem Befestigungsteil (1) des Wischarmes und der Unterseite der Befestigungsmutter (9) eine Unterlegscheibe (15) angeordnet ist.

30. Wischarm nach Anspruch 29, **dadurch gekennzeichnet**, daß die Unterlegscheibe (15) drehbar an der Unterseite der Befestigungsmutter (9) gehalten ist.

31. Wischarm nach einem der vorhergehenden Ansprüche, **dadurch gekennzeichnet**, daß die Befestigungsmutter (9) zwischen dem Bund (12) und dem Angriffsteil (19) für den entsprechenden Mutternschlüssel (20) einen zylindrischen Schaft (21) besitzt, dessen Durchmesser kleiner ist als der Durchmesser des Bundes (12) und größer ist als die Weite des Angriffsteiles (19) der Befestigungsmutter (9).

32. Wischarm nach einem der vorhergehenden Ansprüche, **dadurch gekennzeichnet**, daß die Befestigungsmutter (9) an ihrer dem Befestigungsteil (1) zugewandten Seite einen kurzen zylindrischen Bohrungsabschnitt (31) mit geringfügig größerem Durchmesser als das sich anschließende Mutterngewinde (32) besitzt.

33. Wischarm nach einem der vorhergehenden Ansprüche, **dadurch gekennzeichnet**, daß sich in der Öffnung (7) des Befestigungsteiles (1) an die verjüngte Seite des Innenkonus (22) ein kurzer zylindrischer Bohrungsabschnitt (33) anschließt.

34. Wischarm nach einem der vorhergehenden Ansprüche, **dadurch gekennzeichnet**, daß sich an der der zu reinigenden Scheibe zugewandten Unterseite (34) des Befestigungsteiles (1) im Anschluß an die erweiterte Seite des Innenkonus (22) der Öffnung (7) in axialer Richtung ein hohlzylindrischer Fortsatz (35) erstreckt, welcher sich mit seiner Innenfläche auf dem Schaft der Antriebswelle (8) abstützen kann.

35. Wischarm nach Anspruch 34, **dadurch gekennzeichnet**, daß sich in axialer Richtung an den hohlzylindrischen Fortsatz (35) ein zweiter hohlzylindrischer Fortsatz (72) mit einem größeren Durchmesser anschließt, welcher den aus der Fahrzeugkarosserie herausragenden Teil eines Wischerlagers im wesentlichen überdecken kann.

36. Wischarm nach einen der vorhergehenden Ansprüche, **dadurch gekennzeichnet**, daß der Bund (12) der Befestigungsmutter (9) durch eine ebene oder profilierte Lochscheibe (17) ersetzt ist, die an der Befestigungsmutter (9) befestigt ist.

37. Wischarm nach Anspruch 36, **dadurch gekennzeichnet**, daß die Lochscheibe (17) starr an der Befestigungsmutter (9) befestigt ist und eine kreisförmige Außenkontur besitzt.

38. Wischarm nach Anspruch 36, **dadurch gekennzeichnet**, daß die Lochscheibe (17) in axialer Richtung fixiert aber in Umfangsrichtung drehbar an der Befestigungsmutter (9) befestigt ist und eine kreisförmige oder von der Kreisform abweichende Außenkontur besitzt.

39. Wischarm nach einem der vorhergehenden Ansprüche, **dadurch gekennzeichnet**, daß anstelle der Befestigungsmutter (9) eine Befestigungsschraube (13) an dem Befestigungsteil (1) des Wischarmes angeordnet und unverlierbar gehalten ist, wobei der Gewindeschaft der Befestigungsschraube (13) innerhalb der Öffnung (7) für die Befestigung auf der Wischerwelle (8) angeordnet und in ein stirnseitig in das Ende der Antriebswelle (8) eingebrachtes Innengewinde einschraubbar ist und wobei der Schraubenkopf (14) an seiner auf dem Befestigungsteil (1) aufliegenden Seite mit einem sich radial erstreckenden, umlaufenden Bund (12) ausgestattet ist und wobei Anschläge (10) über dem Bund (12) am Befestigungsteil (1) angebracht sind, mit denen die Befestigungsschraube (13) zusammenwirkt.

40. Wischarm nach Anspruch 39, **dadurch gekennzeichnet**, daß die Befestigungsschraube (13) an ihrem dem Schraubenkopf (14) gegenüberliegenden Ende einen zylindrischen Bereich (46) ohne Gewinde besitzt, dessen Durchmesser geringfügig kleiner ist als der Innendurchmesser des Innengewindes in der Antriebswelle (8).

## Claims

1. Wiper arm for a windshield wiper mechanism, particularly, for motor vehicles, rigidly mountable to a drive shaft (8), the wiper arm provided with an opening (7) in its mounting part (1) that is preferably realized in the form of an inner cone (22), by means of which it can be attached to or pressed onto the end of the drive shaft (8) that is preferably realized in the form of a corresponding outer cone (23) and can be fixed by means of a fastening nut (9) which is held in captive fashion on the mounting part (1) of the wiper arm at least approximately in the mounting position, that the wiper arm can be pulled off the drive shaft (8) by means of the fastening nut (9), and wherein the fastening nut (9) is provided with a radially extending collar (12) on its edge that faces the mounting part (1), which is overlapped by one or more limit stops (10) that are connected to the mounting part (1) wherein the mounting part (1) of the wiper arm is provided with a recess (26) in the upper side (25), that the opening (7) for mounting the wiper arm on the drive shaft (8) ends in the bottom of the recess, that the fastening nut (9) is arranged inside the recess (26), and that one or more stops (10) are connected to the mounting part (1) which are arranged above the collar (12) of the fastening nut (9), characterized in that the recess (26) at the upper side (25) of the mounting part (1) is a groove (26) closed at the circumference and that the stop or stops (10) arranged above the collar (12) of the fastening nut (9) are stops (10) which are separately mounted at the mounting part (1).

2. Wiper arm according to Claim 1, characterized by the fact that the limit stops (10) are realized in the form of two pins (27) that are arranged in flush bores (28) situated in the wall that surrounds the recess (26), above the collar (12) and on opposite sides of the fastening nut (9).

3. Wiper arm according to Claim 2, characterized by the fact that the pins (27) have a round, rectangular or another profiled cross section.

4. Wiper arm according to one of the previous claims, characterized by the fact that the limit stops (10) can be removed from the mounting part (1) after mounting the wiper arm on the drive shaft (8), and that said limit stops can be reattached to the mounting part (1) before removing the wiper arm from the drive shaft (8).

5. Wiper arm according to Claim 4, characterized by the fact that the limit stops (10) consist of two parallel pins (27) that are spaced apart and connected to one another at one end in the shape of a fork, and that said pins can be inserted into or removed from the flush bores (28) in the wall that surrounds the recess (26), above the collar (12) of the fastening nut (9).

6. Wiper arm according to Claim 1, characterized by the fact that the recess (26) in the mounting part (1) is provided with a shoulder (38) that is arranged in the bottom edge of the recess radially next to the collar (12) of the fastening nut (9), that the shoulder is at least slightly higher than the collar (12) of the fastening nut (9), and that a perforated disk (37) arranged on the shoulder (38) radially overlaps the collar (12) of the fastening nut (9) and is fastened to the mounting part (1).

7. Wiper arm according to Claim 1, characterized by the fact that as a stop (10) a perforated disk (37) loosely lies on the collar (12) of the fastening nut (9), and that a lock washer (40) arranged above the perforated disk (37) such that it radially overlaps the perforated disk (37) is held in the walls of the recess (26).

8. Wiper arm according to Claim 1, characterized by the fact that as a stop (10) the inner edge of a clamping bridge (36) is arranged above the collar (12) of the fastening nut (9), and that the outer edge of the clamping bridge is supported at the wall of the recess (26) by bracing.

9. Wiper arm according to Claim 1, characterized by the fact that as a stop (10) a radially split washer (45) that can be radially moved is axially supported in the wall of the recess (26), that the collar (12) of the fastening nut (9) is stepped, with the diameter (d2) of the step (44) being slightly smaller than the inner diameter (d3) of the split washer (35), that the lower part (43) of the collar (12) which faces the mounting part (1) can be axially pressed through the split washer (35) while temporarily widening it, and that the split washer (35) reassumes its original shape and size on the step (44) and overlaps the lower part (43) of the collar (12).

10. Wiper arm for a windshield wiper mechanism, particularly, for motor vehicles, rigidly mountable to a drive shaft (8), the wiper arm provided with an opening (7) in its mounting part (1) that is preferably realized in the form of an inner cone (22), by means of which it can be attached to or pressed onto the end of the drive shaft (8) that is preferably realized in the form of a corresponding outer cone (23) and can be fixed by means of a fastening nut (9) which is held in captive fashion on the mounting part (1) of the wiper arm at least approximately in the mounting position, that the wiper arm can be pulled off the drive shaft (8) by means of the fastening nut (9), and wherein the fastening nut (9) is provided with a radially extending collar (12) on its edge that faces the mounting part (1), which is overlapped by one or more limit stops (10) that are connected to the mounting part (1) wherein the mounting part (1) of the wiper arm is provided with a recess (26) in the upper side (25), that the opening (7) for mounting the wiper arm on the drive shaft (8) ends in the bottom of the recess, that the recess (26) is open towards one side such that an insertion region (62) for the fastening nut (9) is formed, and wherein at least the side walls of the open recess (26) are provided with a groove (63) for inserting or accommodating the collar (12) of the fastening nut (9) and that the fastening nut (9) can be laterally inserted through the insertion region (62) until it is at least approximately situated in the mounting position, and that the insertion region (62) is blocked by a separate securing element (64),
characterized in that the insertion region (62) is blocked by the securing element (64) which is separately mounted at the mounting part (1).

11. Wiper arm for a windshield wiper mechanism, particularly, for motor vehicles, rigidly mountable to a drive shaft (8), the wiper arm provided with an opening (7) in its mounting part (1) that is preferably realized in the form of an inner cone (22), by means of which it can be attached to or pressed onto the end of the drive shaft (8) that is preferably realized in the form of a corresponding outer cone (23) and can be fixed by means of a fastening nut (9) which is held in captive fashion on the mounting part (1) of the wiper arm at least approximately in the mounting position, that the wiper arm can be pulled off the drive shaft (8) by means of the fastening nut (9), and wherein the fastening nut (9) is provided with a radially extending collar (12) on its edge that faces the mounting part (1), which is overlapped by one or more limit stops (10) that are connected to the mounting part (1) wherein the mounting part (1) of the wiper arm is made in total as a cast part or is built by a cast metal insert (48) having the opening (7) for the mounting on the drive shaft (8), which is attached to a metal sheet part (47), that a collar (79) that, relative to the geometric axis of the opening (7), is radially open at least towards one side is integrally formed onto the upper side (25) of the mounting part (1) or the cast metal insert (48), in such a way that the fastening nut (9) with its collar (12) can be laterally inserted underneath the collar (79) and that the upper part of the fastening nut (9) protrudes from the collar (79) in the form of an axial extension of the geometric axis of the opening (7), and that the insertion region (62) is blocked by a securing element (64), characterized in that the insertion region (62) is blocked by the securing element (64) which is separately mounted at the mounting part (1).

12. Wiper arm according to Claim 11, characterized in that the cast metal insert (48) is inserted preferably from-closed into a sheet metal part (47) of essentially U-shaped cross section from the bottom, with the upper part of the cast metal insert which accommodates the fastening nut (9) extending through an opening (52) in the rear part (49) of the sheet metal part (47) and being fixed on the sheet metal part (47) by means of bent sections of the sheet metal part (47) that, in particular, are realized in the form of holding tabs (80).

13. Wiper arm according to Claim 12, characterized in that the collar (79) is open at least approximately perpendicular to the longitudinal axis (85) of the mounting part (1), that the opening (52) in the rear part (49) of the sheet metal part (47) and the upper part of the cast metal insert (48) arranged in the opening (52) have corresponding, essentially rectangular shapes, that the longitudinal sides (84) of this rectangular shape extend parallel to the longitudinally axis (85) of the mounting part (1), and that the collar (12) of the fastening nut (9) protrudes from the longitudinal sides (84) of the rectangular form the recess (52) and acts against the sheet metal part (47) in these opposing sections (86).

14. Wiper arm according to Claim 11, characterized in that the cast metal insert (48) is attached to the sheet metal part (47) with a slot-shaped groove (82) in its face side and fixed on the sheet metal part (47) by means of bent sections of the sheet metal part (47) that, in particular, are realized in the form of holding tabs (80).

15. Wiper arm according to Claim 11, characterized in that the cast metal insert (48) is attached to the sheet metal part (47) from the top, that the lower part of the cast metal insert (48) extends through the opening (52) in the sheet metal part (47), and that the cast metal insert (48) is riveted, caulked or screwed to the sheet metal part (47).

16. Wiper arm for a windshield wiper mechanism, particularly, for motor vehicles, rigidly mountable to a drive shaft (8), the wiper arm is provided with a mounting part (1) that is formed by a sheet metal part of essentially U-shaped cross section, that comprises two side walls and a rear part (49) connecting the side walls, further with an opening (7) in its mounting part (1) formed preferably as an inner cone (22), by means of which the mounting part can be attached to or pressed onto the end of the drive shaft (8) that is preferably realized in the form of a corresponding outer cone (23) and fixed on the drive shaft (8) by means of a fastening nut (9), the fastening nut (9) acts is held in captive fashion on the mounting part (1) at least approximately in the mounting position such that the wiper arm can be pulled off the drive shaft (8) by means of the fastening nut (9), and wherein the fastening nut (9) is provided with a radially extending collar (12) on its edge that faces the mounting part (1), which is overlapped by fastening section manufactured in one piece with the mounting part (1), characterized in that the fastening nut (9) adjoins the rear part (49) of the mounting part (1), and that several fastening sections (77) that are distributed over the circumference protrude upward from the rear part (49) adjacent to the edge of the collar (12) and overlap the upper side (89) of the collar (12) of the fastening nut (9) and act as stops.

17. Wiper arm according to Claim 16, characterized in that the fastening sections (77) are, except for one side, cut out or punched out of the rear part (49), and that said fastening sections are initially bent upwardly and then radially inwardly over the edge of the collar (12) of the fastening nut (9).

18. Wiper arm according to Claim 16 or 17, characterized in that one radial side of the opening (7) is not provided with a fastening section (77) such that the fastening nut (9) with its collar (12) and, if so required, the washer (15) can be inserted underneath the existing fastening sections (77), and that the insertion region (62) is blocked by a securing element (64) mounted separately at the mounting part (1).

19. Wiper arm according to one of Claims 10 to 15 or 18, characterized in that the securing element (64) is realized in the form of a stopper-like plastic part with snap-on elements which is snapped into an opening (66) in the rear part (49) of the mounting part (1).

20. Wiper arm according to one of Claims 10 to 15 or 18, characterized in that the securing element (64) is realized in the form of a hinge bolt, by means of which a covering cap (67) is coupled to the mounting part (1), that the hinge bolt is arranged in flush bores (76) in the mounting part (1) or in the collar (79) which are approximately situated at the elevation of the collar (12) and, if so provided, a washer (15), and that the hinge bolt blocks the insertion region (62).

21. Wiper arm according to one of Claims 10 to 15, characterized in that the securing element (64) is a hinge bolt, by means of which a covering cap (67) is coupled to the mounting part (1), wherein the hinge bolt is arranged in flush bores (76) in the mounting part (1) or in the collar (79) situated approximately at the elevation of the collar (79) and, if so provided, a washer (15), and blocking the insertion region (62).

22. Wiper arm according to Claim 21, characterized in that two hinge pins (75) are integrally formed onto the covering cap (67) instead of one continuous hinge bolt, and that said hinge pins extend through the flush bores (76) from the outside.

23. Wiper arm according to one of Claims 10 to 15, characterized in that the securing element (64) is realized in the form of a formed part (70) that, in particular, consists of plastic and that can be snapped onto the mounting part (1) of the wiper arm, in particular, in the direction in which the fastening nut (9) is inserted, and that the formed part preferably supplements the shape of the mounting part (1) such that a harmonious unit is formed.

24. Wiper arm for a windshield wiper mechanism, particularly, for motor vehicles, rigidly mountable to a drive shaft (8), the wiper arm provided with an opening (7) in its mounting part (1) that is preferably realized in the form of an inner cone (22), by means of which it can be attached to or pressed onto the end of the drive shaft (8) that is preferably realized in the form of a corresponding outer cone (23) and can be fixed by means of a fastening nut (9) which is held in captive fashion on the mounting part (1) of the wiper arm at least approximately in the mounting position, that the wiper arm can be pulled off the drive shaft (8) by means of the fastening nut (9), and wherein the fastening nut (9) is provided with a radially extending collar (12) on its edge that faces the mounting part (1), which is overlapped by one or more limit stops (10) that are connected to the mounting part (1) and wherein the fastening nut (9) is provided with a radially extending collar (12) on its edge that faces the mounting part (1), which is overlapped by one or more stops connected to the mounting part (1), characterized in that the fastening nut (9) lies on the upper side (25) of the mounting part (1), that a perforated disk (53) overlaps the collar (12), that the upper part of the fastening nut (9) extends through the perforation of the perforated disk (53), and that the perforated disk (53) comprises projecting fastening sections (54), by means of which the perforated disk (53) is fastened to the mounting part (1).

25. Wiper arm for a windshield wiper mechanism, particularly, for motor vehicles, rigidly mountable to a drive shaft (8), the wiper arm provided with an opening (7) in its mounting part (1) that is preferably realized in the form of an inner cone (22), by means of which it can be attached to or pressed onto the end of the drive shaft (8) that is preferably realized in the form of a corresponding outer cone (23) and can be fixed by means of a fastening nut (9) which is held in captive fashion on the mounting part (1) of the wiper arm at least approximately in the mounting position, that the wiper arm can be pulled off the drive shaft (8) by means of the fastening nut (9), characterized in that the fastening nut (9) is provided with a hollow-cylindrical extension (18) on its side that adjoins the upper side (25) of the mounting part (1), that the hollow cylindrical extension extends through the perforation of the perforated disk (53), and that the edge of the hollow-cylindrical extension is flanged on the underside of the perforated disk (53), wherein the fastening nut (9) can be turned relative to the perforated disk (53), and that the perforated disk (53) comprises projecting fastening sections (54), by means of which the perforated disk is fastened to the mounting part (1).

26. Wiper arm according to claim 24 or 25, characterized in that the outer circumference of the perforated disk (53) comprises at least two diametrally opposed fastening sections (54) or more than two fastening sections that are distributed over its circumference, that the fastening sections extend axially along one side wall (56) of the mounting part (1), and that the inwardly bent ends (55) of the fastening sections overlap the lower edge of the side wall (56) or a recess in the side wall (56) or engage into a corresponding recess or opening in the side wall (56) of the mounting part (1).

27. Wiper arm according to claim 24 or 25, characterized in that the outer circumference of the perforated disk (53) comprises at least two diametrally opposed fastening sections (54) or more than two fastening sections that are distributed over its circumference, that the fastening sections axially extend through openings (60) in the rear part (49) of the mounting part (1), and that preferably outwardly bent ends (55) of the fastening sections engage beneath the underside of the rear part (49) or the side wall (56) or a projection (57, 59) of the side wall (56) or engage in a corresponding recess in the side wall (56) of the mounting part (1).

28. Wiper arm according to one of Claims 24 to 27, characterized in that the fact that the fastening sections (54) of the perforated disk (53) are realized in springlike fashion, such that the perforated disk (53) can be snapped onto the mounting part (1) or snapped into corresponding recesses or the like of the mounting part (1) with its fastening sections (54).

29. Wiper arm according one of Claim 24 to 27, characterized by the fact that a washer (15) is arranged between the mounting part (1) of the wiper arm and the underside of the fastening nut (9) or the screw head (14) of the fastening screw (13).

30. Wiper arm according to Claim 29, characterized by the fact that the washer (15) is held on the underside of the fastening nut (9) such that it can be turned.

31. Wiper arm according to one of the previous claims, characterized by the fact that the fastening nut (9) includes a cylindrical shaft (21) between the collar (12) and the part (19) for attaching a corresponding wrench (20), and that the diameter of said cylindrical shaft is smaller than the diameter of the collar (12) and larger than the width of the part (19) of the fastening nut (9).

32. Wiper arm according to one of the previous claims, characterized in that the fastening nut (9) includes a short cylindrical bore section (31) on its side that faces the mounting part (1), and that the diameter of the cylindrical bore section is slightly larger than the diameter of the adjacent thread (32) of the nut.

33. Wiper arm according to one of the previous Claims, characterized in that a short cylindrical bore section (33) is situated in the opening (7) of the mounting part (1) adjacent to the tapered side of the inner cone (22).

34. Wiper arm according to one of the previous Claims, characterized by the fact that a hollow-cylindrical extension (35) extends on the underside (34) of the mounting part (1) which faces the windshield to be cleaned, adjacent to the widened side of the inner cone (22) of the opening (7), with said hollow-cylindrical extension being able to support itself on the drive shaft (8) with its inner surface.

35. Wiper arm according to Claim 34, characterized in that a second hollow-cylindrical extension (72) of larger diameter is arranged adjacent to the hollow-cylindrical extension (35) in the axial direction, with the second hollow-cylindrical extension being able to cover parts of the wiper bearings which protrude from the motor vehicle chassis.

36. Wiper arm according to one of the previous claims, characterized in that the collar (12) of the fastening nut (9) is replaced with a planar or contoured perforated disk (17) that is fastened to the fastening nut (9).

37. Wiper arm according to Claim 36, characterized in that the perforated disk (17) is rigidly fastened to the fastening nut (9) and has a circular outer contour.

38. Wiper arm according to Claim 36, characterized in that the perforated disk (17) is fastened to the fastening nut (9) such that it is fixed in the axial direction but can be turned in the circumferential direction, and that the perforated disk has a circular or noncircular outer contour.

39. Wiper arm according to one of the previous claims, characterized in that a fastening screw (13) is arranged and held in captive fashion on the mounting part (1) of the wiper arm instead of the fastening nut (9), that the threaded shaft of the fastening screw (13) is arranged inside the opening (7) for mounting the wiper arm on the drive shaft (8), that the aforementioned fastening screw can be screwed into the interior threads arranged in one face side of the end of the drive shaft (8), that the screw head (14) is provided with a radially extending circumferential collar (12) on its side that adjoins the mounting part (1), and that the limit stops (10) that cooperate with the fastening screw (13) are arranged above the collar (12) on the mounting part (1).

40. Wiper arm according to Claim 43, characterized by the fact that the fastening screw (13) comprises a cylindrical section (46) that is not provided with threads and arranged on the end situated opposite to the screw head (14), with the diameter of this cylindrical region being slightly smaller than the inner diameter of the interior threads in the drive shaft (8).

## Revendications

1. Bras d'essuie-glace, notamment pour véhicules automobiles, qui doit être fixé d'une manière bloquée en rotation sur un arbre d'entraînement (8), dans lequel le bras d'essuie-glace peut être enfiché ou emmanché à force par une ouverture (7) qui est formée dans sa partie de fixation (1) et est agencée de préférence sous la forme d'un cône intérieur (22), sur l'extrémité d'un arbre d'entraînement (8), qui est agencé de préférence sous la forme d'un cône extérieur correspondant (23), et doit être fixé à l'arbre d'entraînement (8) au moyen d'un écrou de fixation (9), et dans lequel au moins approximativement dans la position de montage, l'écrou de fixation (9) est retenu d'une manière imperdable sur la partie de fixation (1) du bras d'essuie-glace de telle sorte que le bras d'essuie-glace peut être retiré de l'arbre d'entraînement (8) avec l'écrou de fixation (9), et l'écrou de fixation (9) possède, sur le côté tourné vers la partie de fixation (1), un collet radial (12), au-dessus duquel s'engagent une ou plusieurs butées reliées à la partie de fixation (1), et dans lequel la partie de fixation (1) du bras d'essuie-glace possède sur le côté supérieur (25) un évidement (26), dans le fond duquel débouche l'ouverture (7) prévue pour la fixation du bras d'essuie-glace sur l'arbre d'entraînement (8), et l'écrou de fixation (9) est disposé à l'intérieur de l'évidement (26) et il est prévu sur la partie de fixation (10) une ou plusieurs butées, qui sont disposées au-dessus du collet (12) de l'écrou de fixation (9), caractérisé en ce que l'évidement (26) situé dans la face supérieure de la partie de fixation (1) est un évidement (26) fermé sur sa périphérie et que la ou les butées (10), qui sont disposées au-dessus du collet (12) de l'écrou de fixation (9), sont des butées (10) montées séparément sur la partie de fixation (1).

2. Bras d'essuie-glace selon la revendication 1, caractérisé en ce que les butées (10) sont deux tiges (27), qui sont disposées dans des perçages alignés (28) au-dessus du collet (12) sur des côtés opposés de l'écrou de fixation (9) dans la paroi entourant l'évidement (26).

3. Bras d'essuie-glace selon la revendication 2, caractérisé en ce que les tiges (27) possèdent une section transversale circulaire ou rectangulaire ou ayant un autre profil.

4. Bras d'essuie-glace selon l'une des revendications précédentes, caractérisé en ce qu'après le montage du bras d'essuie-glace sur l'arbre d'entraînement (8), les butées (10) peuvent être retirées de la partie de fixation (1) et peuvent être montées à nouveau sur la partie de fixation (1) avant le démontage du bras d'essuie-glace.

5. Bras d'essuie-glace selon la revendication 4, caractérisé en ce que les butées (10) sont deux tiges (27) parallèles et distantes l'une de l'autre, qui sont reliées entre elles, à une extrémité, pour former une fourche et qui peuvent être introduites dans des perçages alignés (28) au-dessus du collet (12) de l'écrou de fixation (9) dans la paroi entourant l'évidement (26) ou peuvent être retirés de ces perçages.

6. Bras d'essuie-glace selon la revendication 1, caractérisé en ce que l'évidement (26) situé dans la partie de fixation (1) possède, au niveau de son bord situé du côté du sol et ce radialement à côté du collet (12) de l'écrou de fixation (9), un épaulement (38), qui possède une hauteur au moins légèrement supérieure à celle du collet (12) de l'écrou de fixation (9), qu'un disque perforé (37) est disposé, en tant que butée (10), de manière à entourer radialement le collet (12) de l'écrou de fixation (9), sur l'épaulement (28) et est fixé à la partie de fixation (1).

7. Bras d'essuie-glace selon la revendication 1, caractérisé en ce qu'un disque perforé (27) s'applique, en tant que butée (10), de façon lâche sur le collet (12) du collet de fixation (9) et qu'une rondelle de sécurité (40), qui s'engage radialement au-dessus du disque perforé (37), est disposée au-dessus de ce disque perforé (37) et est fixée à la paroi de l'évidement (26).

8. Bras d'essuie-glace selon la revendication 1, caractérisé en ce qu'une bride de serrage (36) est disposée, en tant que butée (10), au moyen de son bord intérieur sur le collet (12) de l'écrou de fixation (9) et est fixée, par son bord extérieur, par serrage sur la paroi de l'évidement (26).

9. Bras d'essuie-glace selon la revendication 1, caractérisé en ce qu'une bague élastique fendue radialement (45) est disposée, en tant que butée (10), dans la paroi de l'évidement (26) en étant déplaçable radialement et en étant supportée axialement, que le collet (12) de l'écrou de fixation (9) est étagé en forme d'épaulement, le diamètre (d2) de l'épaulement (44) étant légèrement inférieur au diamètre (d3) de la bague élastique (35), que la partie inférieure (43) du collet (12), qui est tournée vers la partie de fixation (1), peut être repoussée axialement à travers la bague élastique (35) moyennant un élargissement transitoire de cette bague, et que la bague élastique (35) a pris à nouveau sa forme et ses dimensions initiales sur l'épaulement (44), et s'engage par-dessus la partie inférieure (43) du collet (12).

10. Bras d'essuie-glace pour un système d'essuie-glace, notamment pour véhicules automobiles, qui doit être fixé d'une manière bloquée en rotation sur un arbre d'entraînement (8), dans lequel le bras d'essuie-glace peut être enfiché ou emmanché à force par une ouverture (7) qui est formée dans sa partie de fixation (1) et est agencée de préférence sous la forme d'un cône intérieur (22), sur l'extrémité d'un arbre d'entraînement (8), qui est agencé de préférence sous la forme d'un cône extérieur correspondant (23), et doit être fixé à l'arbre d'entraînement (8) au moyen d'un écrou de fixation (9), et dans lequel au moins approximativement dans la position de montage, l'écrou de fixation (9) est retenu d'une manière imperdable sur la partie de fixation (1) du bras d'essuie-glace de telle sorte que le bras d'essuie-glace peut être retiré de l'arbre d'entraînement (8) avec l'écrou de fixation (9), et l'écrou de fixation (9) possède, sur le côté tourné vers la partie de fixation (1), un collet radial (12), au-dessus duquel s'engagent une ou plusieurs butées reliées à la partie de fixation (1), et dans lequel la partie de fixation (1) du bras d'essuie-glace possède sur le côté supérieur (25) un évidement (26), dans le fond duquel débouche l'ouverture (7) prévue pour la fixation du bras d'essuie-glace sur l'arbre d'entraînement (8), et l'évidement (26) est ouvert d'un côté, en formant de ce fait une zone d'insertion (62) pour l'écrou de fixation, et dans lequel une rainure (63) pour l'insertion ou le logement du collet (12) de l'écrou de fixation (9) est aménagée au moins dans les parois latérales de l'évidement ouvert (36), et l'écrou de fixation (9) est inséré latéralement à travers la zone d'insertion (62), jusque dans une position de montage au moins approximative, et la zone d'insertion (62) est bloquée par l'élément de sécurité (64), caractérisé en ce que la zone d'insertion (62) est bloquée par l'élément de sécurité (64) monté séparément sur la partie de fixation (1).

11. Bras d'essuie-glace pour un système d'essuie-glace, notamment pour véhicules automobiles, qui doit être fixé d'une manière bloquée en rotation sur un arbre d'entraînement (8), le bras d'essuie-glace peut être enfiché ou emmanché à force par une ouverture (7) qui est formée dans sa partie de fixation (1) et est agencée de préférence sous la forme d'un cône intérieur (22), sur l'extrémité d'un arbre d'entraînement (8), qui est agencé de préférence sous la forme d'un cône extérieur correspondant (23), et doit être fixé à l'arbre d'entraînement (8) au moyen d'un écrou de fixation (9), et dans lequel au moins approximativement dans la position de montage, l'écrou de fixation (9) est retenu d'une manière imperdable sur la partie de fixation (1) du bras d'essuie-glace de telle sorte que le bras d'essuie-glace peut être retiré de l'arbre d'entraînement (8) avec l'écrou de fixation (9), et l'écrou de fixation (9) possède, sur le côté tourné vers la partie de fixation (1) , un collet radial (12), au-dessus duquel s'engagent une ou plusieurs butées reliées à la partie de fixation (1), et dans lequel la partie de fixation (1) du bras d'essuie-glace est réalisée notamment sous la forme d'une pièce moulée ou est formée par un insert formé d'une pièce moulée (48), qui contient l'ouverture (7) pour la fixation sur l'arbre d'entraînement (8) et qui est fixé sur une pièce en tôle (47), et un collet (79) est moulé sur la face supérieure (25) de la pièce de fixation (1) ou de l' insert formé d'une pièce moulée (48), collet qui s'ouvre radialement au moins d'un côté par rapport à l'axe géométrique de l'ouverture (7), et dans lequel l'écrou de fixation (9) est inséré avec son collet (12) latéralement au-dessous du collet (79), de sorte que la partie supérieure de l'écrou de fixation (9) fait saillie hors du collet (79) par un prolongement axial, par rapport à l'axe géométrique de l'ouverture (7), et la zone d'insertion (62) est bloquée par l'élément de sécurité (64), caractérisé en ce que la zone d'insertion (62) est bloquée par l'élément de sécurité (64), qui est monté séparément sur la partie de fixation (1).

12. Bras d'essuie-glace selon la revendication 11, caractérisé en ce que l'insert (48) formé d'une pièce coulée est inséré à partir du bas dans une pièce en tôle (47) essentiellement en forme de U en coupe transversale, et ce de préférence selon une liaison par formes complémentaires, et traverse, par sa partie supérieure logeant l'écrou de fixation (9), un passage (52) formé dans la partie arrière (49) de la pièce en tôle (47) et est fixé sur la pièce en tôle (47) par des parties repliées de la pièce en tôle (47), notamment sous la forme de pattes de fixation (80).

13. Bras d'essuie-glace selon la revendication 12, caractérisé en ce que le collet (79) est ouvert au moins approximativement perpendiculairement à l'axe longitudinal (85) de la pièce de fixation (1), que le passage (52) situé dans la partie arrière (49) de la pièce en tôle (47) et la partie supérieure, disposée dans le passage (52), de l'insert formé d'une pièce moulée (48) possèdent des formes essentiellement rectangulaires, qui se correspondent, les côtés longitudinaux (84) de cette forme rectangulaire étant parallèles à l'axe longitudinal (85) de la pièce de fixation (1), et que le collet (12) de l'écrou de fixation (9) fait saillie au-delà de l'évidement (52), sur les côtés longitudinaux (84) de la forme rectangulaire et agit sur la pièce en tôle (47), dans ces sections opposées (86).

14. Bras d'essuie-glace selon la revendication 11, caractérisé en ce que l'insert en forme de pièce moulée (48) est enfiché au moyen d'une rainure frontale (82) en forme de fente de la pièce en tôle (47) et est fixé au moyen de sections repliées de la pièce en tôle (47), notamment sous la forme de pattes de fixation (80) sur la pièce en tôle (47).

15. Bras d'essuie-glace selon la revendication 11, caractérisé en ce que l'insert en forme de pièce moulée (48) peut être emmanché par le haut sur la pièce en tôle (47), la partie inférieure de l'insert formé d'une pièce moulée (48) traversant le passage (52) situé dans la pièce en tôle (47), tandis que l' insert (48) formé d'une pièce moulée est fixé par rivetage, matage ou vissage à la pièce en tôle (47).

16. Bras d'essuie-glace pour un système d'essuie-glace, notamment pour véhicules automobiles, qui doit être fixé d'une manière bloquée en rotation sur un arbre d'entraînement (8), et dans lequel le bras d'essuie-glace possède une partie de fixation (1), qui est une pièce en tôle essentiellement en forme de U en coupe transversale, comportant deux parois latérales et une partie arrière (49) reliant entre elles les parois latérales, et peut être enfichée ou emmanchée à force, par une ouverture (7), qui est formée dans sa partie de fixation (1) qui est agencée de préférence sous la forme d'un cône intérieur (22), sur l'extrémité d'un arbre d'entraînement (8) qui est agencé de préférence sous la forme d'un cône extérieur correspondant (23), et doit être fixée à l'arbre d'entraînement (8) au moyen d'un écrou de fixation (9), et dans lequel au moins approximativement dans la position de montage, l'écrou de fixation (9) est retenu d'une manière imperdable sur la partie de fixation (1) du bras d'essuie-glace, de telle sorte que le bras d'essuie-glace peut être retiré de l'arbre d'entraînement (8) à l'aide de l'écrou de fixation (9), et que l'écrou de fixation (9) possède, sur le côté tourné vers la partie de fixation (1), un collet radial (12), au-dessus duquel fait saillie une section de fixation formée d'un seul tenant avec la partie de fixation (1), caractérisé en ce que l'écrou de fixation (9) s'applique sur la partie arrière (49) de la partie de fixation (1) et que plusieurs sections de fixation (77), qui sont disposées d'une manière répartie sur la périphérie et sont réalisées d'un seul tenant avec la partie de fixation (1), font saillie vers le haut, à côté du bord du collet (12), à partir de la partie arrière (49) et s'engagent en tant que butées au-dessus du bord de collet (12) de l'écrou de fixation (9).

17. Bras d'essuie-glace selon la revendication 16, caractérisé en ce que les sections de fixation (77) sont dégagées par cisaillement ou découpage à partir de la partie arrière (49) extérieurement sur un côté à partir de la partie arrière (49) et sont repliées tout d'abord vers le haut, puis radialement vers l'intérieur par l'intermédiaire du bord du collet (12) de l'écrou de fixation (9)

18. Bras d'essuie-glace selon la revendication 16 ou 17, caractérisé en ce qu'aucune section de fixation (77) n'est située sur un côté radial de l'ouverture (7) de sorte que l'écrou de fixation (9) est inséré par son collet (12) et éventuellement en supplément la rondelle (15) est insérée jusqu'au-dessous des sections de fixation existantes (77) et que la zone d'insertion (62) est bloquée par un élément de sécurité (64) monté séparément sur la partie de fixation.

19. Bras d'essuie-glace selon l'une des revendications 10 à 15 ou 18, caractérisé en ce que l'élément de sécurité (64) est une pièce en matière plastique en forme de bouchon comportant des éléments d'encliquetage et qui s'encliquette dans un passage (66) formé dans la partie arrière (49) de la partie de fixation (1).

20. Bras d'essuie-glace selon l'une des revendications 10 à 15 ou 18, caractérisé en ce que l'élément de sécurité (64) est relié d'une manière articulée à un capot de revêtement (77) et est fixé sur la partie de fixation (1) de telle sorte que l'écrou de fixation (9) et éventuellement la rondelle (15) ne peuvent pas se dégager par glissement, le capot de revêtement (77) pouvant basculer au-dessus de l'écrou de fixation (9) après le montage du bras d'essuie-glace sur l'arbre d'entraînement (8), et peut être encliqueté notamment sur la partie de fixation (1).

21. Bras d'essuie-glace selon l'une des revendications 10 à 15, caractérisé en ce que l'élément de sécurité (64) est un boulon d'articulation, au moyen duquel un capot de revêtement (67) est articulé sur la partie de fixation (1), le bouton d'articulation étant disposé dans des perçages alignés (76) situés dans la partie de fixation (1) et dans le collet (79), approximativement à hauteur du collet (12) et éventuellement d'une rondelle (15) et bloquant la zone d'insertion (62).

22. Bras d'essuie-glace selon la revendication 21, caractérisé en ce qu'à la place d'un boulon continu d'articulation deux boulons d'articulation (75) sont formés sur le capot de revêtement (67) et pénètrent, à partir de l'extérieur, dans les perçages alignés (76).

23. Bras d'essuie-glace selon l'une des revendications 10 à 15, caractérisé en ce que l'élément de sécurité (64) est une pièce moulée (70), notamment en matière plastique, qui, en particulier dans la direction d'insertion de l'écrou de fixation (9), peut être encliquetée sur la partie de fixation (1) du bras d'essuie-glace et qui de préférence complète la forme de la partie de fixation (1) pour former un ensemble harmonieux.

24. Bras d'essuie-glace pour un système d'essuie-glace, notamment pour véhicules automobiles, qui doit être fixé d'une manière bloquée en rotation sur un arbre d'entraînement (8), dans lequel le bras d'essuie-glace peut être enfiché ou emmanché à force par une ouverture (7) qui est formée dans sa partie de fixation (1) et est agencée de préférence sous la forme d'un cône intérieur (22), sur l'extrémité d'un arbre d'entraînement (8), qui est agencé de préférence sous la forme d'un cône extérieur correspondant (23), et doit être fixé à l'arbre d'entraînement (8) au moyen d'un écrou de fixation (9), et dans lequel au moins approximativement dans la position de montage, l'écrou de fixation (9) est retenu d'une manière imperdable sur la partie de fixation (1) du bras d'essuie-glace de telle sorte que le bras d'essuie-glace peut être retiré de l'arbre d'entraînement (8) avec l'écrou de fixation (9), et l'écrou de fixation (9) possède, sur le côté tourné vers la partie de fixation (1), un collet radial (12), au-dessus duquel s'engagent une ou plusieurs butées reliées à la partie de fixation (1), caractérisé en ce que l'écrou de fixation (9) s'applique sur la face supérieure (25) de la partie de fixation (1), qu'un disque perforé (53) s'engage par-dessus le collet (12), la partie supérieure de l'écrou de fixation (9) traversant le trou du disque perforé (53), et que le disque perforé (53) possède des sections de fixation (54), qui font saillie à partir de ce disque et au moyen desquelles le disque perforée (53) est fixé à la partie de fixation (1).

25. Bras d'essuie-glace pour un système d'essuie-glace, notamment pour véhicules automobiles, qui doit être fixé d'une manière bloquée en rotation sur un arbre d'entraînement (8), dans lequel le bras d'essuie-glace peut être enfiché ou emmanché à force par une ouverture (7) qui est formée dans sa partie de fixation (1) et est agencée de préférence sous la forme d'un cône intérieur (22), sur l'extrémité d'un arbre d'entraînement (8), qui est agencé de préférence sous la forme d'un cône extérieur correspondant (23), et doit être fixé à l'arbre d'entraînement (8) au moyen d'un écrou de fixation (9), et dans lequel au moins approximativement dans la position de montage, l'écrou de fixation (9) est retenu d'une manière imperdable sur la partie de fixation (1) du bras d'essuie-glace de telle sorte que le bras d'essuie-glace peut être retiré de l'arbre d'entraînement (8) avec l'écrou de fixation (9), caractérisé en ce que l'écrou de fixation (9) possède, sur son côté qui prend appui sur la face supérieure (25) de la partie de fixation (1), un prolongement en forme de cylindre creux (18), qui traverse le trou d'un disque perforé (53) et dont le bord est pourvu d'un rebord au niveau de la face inférieure du disque perforé (53), l'écrou de fixation (9) pouvant tourner par rapport au disque perforé (53), et que le disque perforé (53) possède des sections de fixation (54), qui font saillie à partir de ce disque et à l'aide desquelles le disque est fixé à la partie de fixation (1).

26. Bras d'essuie-glace selon la revendication 24 ou 25, caractérisé en ce que le disque perforé (53) possède au niveau de sa périphérie extérieure au moins deux sections de fixation (54), qui sont diamétralement opposées, ou plusieurs sections de fixation (54), qui sont disposées en étant réparties sur la périphérie et qui s'étendent axialement à l'extérieur le long d'une paroi latérale (56) de la partie de fixation (1), et s'engagent, par une extrémité repliée vers l'intérieur (55), au-dessous du bord inférieur de la paroi latérale (56) ou au-dessous d'un ressaut formé dans la paroi latérale (56), ou s'engagent dans un évidement correspondant ou dans un passage formé dans la paroi latérale (56) de la partie de fixation (1).

27. Bras d'essuie-glace selon la revendication 24 ou 25, caractérisé en ce que le disque perforé (53) possède, au niveau de sa périphérie extérieure, au moins deux sections de fixation (54) diamétralement opposées ou plusieurs sections de fixation (54) disposées d'une manière répartie sur la périphérie et qui s'étendent axialement dans des passages (60) formés dans la partie arrière (49) de la partie de fixation (1) et s'engagent, par une extrémité (55) repliée, de préférence vers l'extérieur, au-dessous de la face inférieure de la partie arrière (49) ou de la paroi latérale (56) ou d'un appendice saillant (57,59) de la paroi latérale (56) ou s'engagent dans un évidement correspondant formé dans la paroi latérale (56) de la pièce de fixation (1).

28. Bras d'essuie-glace selon l'une des revendications 24 à 27, caractérisé en ce que les sections de fixation (54) du disque perforé (53) sont agencées de manière à être élastiques de sorte que le disque perforé (53) s'encliquette sur la partie de fixation (1) ou s'encliquette, au moyen de ses sections de fixation (54), dans des évidements correspondants ou analogues de la partie de fixation (1).

29. Bras d'essuie-glace selon l'une des revendications précédentes, caractérisé en ce qu'une rondelle (15) est disposée entre la partie de fixation (1) du bras d'essuie-glace et la face inférieure de l'écrou de fixation (9).

30. Bras d'essuie-glace selon la revendication 29, caractérisé en ce que la rondelle (15) est retenue avec possibilité de rotation sur la face inférieure de l'écrou de fixation (9).

31. Bras d'essuie-glace selon l'une des revendications précédentes, caractérisé en ce que l'écrou de fixation (9) possède, entre le collet (12) et la partie d'attaque (19) pour la clé à fourche correspondante (20), une tige cylindrique (21), dont le diamètre est inférieur au diamètre du collet (12) et est supérieur à la largeur de la partie d'attaque (19) de l'écrou de fixation (9).

32. Bras d'essuie-glace selon l'une des revendications précédentes, caractérisé en ce que l'écrou de fixation (9) possède, sur son côté tourné vers la partie de fixation (1), une courte section cylindrique de perçage (31) possédant un diamètre légèrement supérieur au filetage contigu de l'écrou (32).

33. Bras d'essuie-glace selon l'une des revendications précédentes, caractérisé en ce qu'une section courte de perçage cylindrique (33) se raccorde, dans l'ouverture (7) de la partie de fixation (1) au côté rétréci du cône intérieur (22).

34. Bras d'essuie-glace selon l'une des revendications précédentes, caractérisé en ce que sur la face inférieure (34), tournée vers le disque à nettoyer, de la partie de fixation (1) et à la suite du côté élargi du cône intérieur (22) de l'ouverture (7) s'étend, dans une direction axiale, un prolongement cylindrique creux (35), qui peut prendre appui par sa surface intérieure sur le corps de l'arbre d'entraînement (8).

35. Bras d'essuie-glace selon la revendication 34, caractérisé en ce qu'au prolongement cylindrique creux (35) se raccorde, dans la direction axiale, un second prolongement cylindrique creux (72) possédant un diamètre plus important et qui peut recouvrir pour l'essentiel la partie, qui fait saillie hors de la carrosserie du véhicule, d'un support d'essuie-glace.

36. Bras d'essuie-glace selon l'une des revendications précédentes, caractérisé en ce que le collet (12) de l'écrou de fixation (9) est remplacé par un disque perforé plat ou profilé (17), qui est fixé sur l'écrou de fixation (9).

37. Bras d'essuie-glace selon la revendication 36, caractérisé en ce que le disque perforé (17) est fixé rigidement à l'écrou de fixation (9) et possède un contour extérieur de forme circulaire.

38. Bras d'essuie-glace selon la revendication 36, caractérisé en ce que le disque perforé (17) est fixé en étant bloqué dans la direction axiale mais en pouvant tourner dans la direction circonférentielle sur l'écrou de fixation (9) et possède un contour extérieur de forme circulaire ou un contour extérieur qui diffère de la forme circulaire.

39. Bras d'essuie-glace selon l'une des revendications précédentes, caractérisé en ce qu'à la place de l'écrou de fixation (9), une vis de fixation (13) est disposée sur la partie de fixation (1) du bras d'essuie-glace et y est retenue de façon imperdable, la tige filetée de la vis de fixation (13) étant disposée à l'intérieur de l'ouverture (7) pour la fixation sur l'arbre d'essuie-glace (8) et étant vissée dans un taraudage formé frontalement dans l'extrémité de l'arbre d'entraînement (8), tandis que la tête de vis (14) est équipée, au niveau de son côté en appui sur la partie de fixation (1), d'un collet périphérique (12), qui s'étend radialement, et que des butées (10) sont installées au-dessus du collet (12) sur la partie de fixation (1), butées avec lesquelles coopère la vis de fixation (13).

40. Bras d'essuie-glace selon la revendication 39, caractérisé en ce que la vis de fixation (13) comporte, sur son extrémité située à l'opposé de la tête de vis (14), une partie cylindrique (46) sans filetage, dont le diamètre est légèrement inférieur au diamètre inférieur du taraudage de l'arbre d'entraînement (8).
